(19) Europäisches Patentamt
European Patent Office
Office européen des brevets

(11) **EP 2 864 756 B1**

(12) **FASCICULE DE BREVET EUROPEEN**

(45) Date de publication et mention de la délivrance du brevet:
**13.04.2016 Bulletin 2016/15**

(51) Int Cl.:
*G01N 15/02* *(2006.01)*   *G01N 35/08* *(2006.01)*
*G01N 21/53* *(2006.01)*   *G01N 21/64* *(2006.01)*

(21) Numéro de dépôt: **13731791.3**

(22) Date de dépôt: **26.06.2013**

(86) Numéro de dépôt international:
**PCT/EP2013/063432**

(87) Numéro de publication internationale:
**WO 2014/001409 (03.01.2014 Gazette 2014/01)**

(54) **PROCÉDÉ DE DÉTERMINATION DE LA DISTRIBUTION EN TAILLE D'UN MÉLANGE DE PARTICULES PAR MISE EN OEUVRE DE LA DISPERSION DE TAYLOR ET SYSTÈME ASSOCIÉ**

VERFAHREN ZUR BESTIMMUNG DER GRÖSSENVERTEILUNG EINES GEMISCHES VON TEILCHEN MIT TAYLOR-DISPERSION UND ZUGEHÖRIGES SYSTEM

METHOD FOR DETERMINING THE SIZE DISTRIBUTION OF A MIXTURE OF PARTICLES USING TAYLOR DISPERSION, AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2012   FR 1256050**

(43) Date de publication de la demande:
**29.04.2015   Bulletin 2015/18**

(73) Titulaires:
• **Centre National de la Recherche Scientifique (CNRS)**
**75016 Paris (FR)**
• **Université Montpellier I**
**F-34060 Montpellier Cedex 1 (FR)**
• **Université Montpellier 2, Sciences et Techniques**
**34095 Montpellier Cedex 5 (FR)**

(72) Inventeurs:
• **COTTET, Hervé**
**F-34920 Le Cres (FR)**
• **CIPELLETTI, Luca**
**F-34000 Montpellier (FR)**
• **MARTIN, Michel**
**F-91220 Le Plessis-Pâté (FR)**
• **BIRON, Jean-Philippe**
**F-34980 Saint Gely Du Fesc (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**US-A1- 2011 264 380**

• **SCHURE M R: "Advances in the theory of particle size distributions by field-flow fractionation - Outlet and apparent polydispersity at constant field", JOURNAL OF CHROMATOGRAPHY, ELSEVIER SCIENCE PUBLISHERS B.V, NL, vol. 831, no. 1, 22 janvier 1999 (1999-01-22), pages 89-104, XP004154913, ISSN: 0021-9673, DOI: 10.1016/S0021-9673(98)00560-3**
• **KELLY B ET AL: "Using Taylor dispersion profiles to characterize polymer molecular weight distributions", PHYSICAL CHEMISTRY CHEMICAL PHYSICS, ROYAL SOCIETY OF CHEMISTRY, CAMBRIDGE, GB, vol. 6, no. 24, 21 décembre 2004 (2004-12-21), pages 5523-5530, XP002512114, ISSN: 1463-9076, DOI: 10.1039/B412659A [extrait le 2004-11-11]**
• **COTTET H ET AL: "Taylor dispersion analysis of mixtures", ANALYTICAL CHEMISTRY, AMERICAN CHEMICAL SOCIETY, US, vol. 79, no. 23, 1 décembre 2007 (2007-12-01), pages 9066-9073, XP002512113, ISSN: 0003-2700, DOI: 10.1021/AC071018W [extrait le 2007-10-25]**

• **COTTET H ET AL: "Determination of dendrigraft poly-L-lysine diffusion coefficients by Taylor dispersion analysis", BIOMACROMOLECULES, AMERICAN CHEMICAL SOCIETY; US, vol. 8, no. 10, 1 octobre 2007 (2007-10-01), pages 3235-3243, XP002512116, ISSN: 1525-7797, DOI: 10.1021/BM070268J [extrait le 2007-09-06]**

**Description**

La présente invention concerne les procédés de détermination de la distribution en taille d'un mélange de particules par mise en oeuvre de la dispersion de Taylor, comportant les étapes consistant à :

- injecter un échantillon du mélange à analyser à l'intérieur d'un capillaire dans lequel s'écoule un éluant ;
- transporter l'échantillon injecté le long du capillaire, depuis une section d'injection jusqu'à une section de détection de celui-ci, dans des conditions expérimentales propres à générer un phénomène de dispersion de Taylor qui soit mesurable au niveau de ladite section de détection ;
- générer, au moyen d'un capteur adapté équipant ladite section de détection, un signal caractéristique de la dispersion de Taylor de l'échantillon transporté ;
- acquérir ledit signal de détection pour obtenir un signal de Taylor expérimental ; et,
- analyser ledit signal de Taylor expérimental.

Dans la suite de ce document, le terme de « particule » est employé pour signifier toutes les molécules en solution et/ou particules en suspension dans le mélange.

Dans le présent document, une espèce regroupe toutes les particules qui se caractérisent par une même taille, par exemple un même rayon hydrodynamique. Une espèce est, par conséquent, associée à une valeur de la grandeur « taille de particule ».

Dans le présent domaine technique, le terme de « déconvolution » d'un signal de Taylor signifie le traitement du signal de Taylor expérimental conduisant à la détermination du rayon hydrodynamique de chacune des espèces constitutives du mélange et à la détermination de la concentration de chacune de ces espèces.

La demande internationale publiée sous le numéro WO 2010 009907 A1 (aussi publié sous la référence US 2011 64380) divulgue un procédé du type précité dont l'étape d'analyse met en oeuvre différents algorithmes de déconvolution d'un signal de Taylor expérimental. Mais, ces algorithmes sont utilisables uniquement dans le cas particulier d'un mélange binaire, c'est-à-dire d'un mélange de deux espèces. En conséquence, ces algorithmes connus ne permettent pas d'analyser n'importe quel échantillon, mais uniquement les échantillons dont on sait préalablement qu'ils résultent du mélange de deux espèces.

SCHURE M R: "Advances in the theory of particle size distributions by field-flow fractionation - Outlet and apparent polydispersity at constant field",JOURNAL OF CHROMATOGRAPHY, ELSEVIER SCIENCE PUBLISHERS B.V, NL, vol. 831, no. 1, 22 janvier 1999 (1999-01-22), pages 89-104, traite le problème de déterminer la distribution en taille d'une espèce polydisperse.

KELLY B ET AL: "Using Taylor dispersion profiles to characterize polymer molecular weight distributions",PHYSICAL CHEMISTRY CHEMICAL PHYSICS, ROYAL SOCIETY OF CHEMISTRY, CAMBRIDGE, GB,vol. 6, no. 24, 21 décembre 2004 (2004-12-21), pages 5523-5530, traitent aussi le problème de déterminer la distribution en taille d'une espèce polydisperse.

COTTET H ET AL: "Taylor dispersion analysis of mixtures",ANALYTICAL CHEMISTRY, AMERICAN CHEMICAL SOCIETY, US,vol. 79, no. 23, 1 décembre 2007 (2007-12-01), pages 9066-9073, traitent le problème de déterminer le coefficient de diffusion d'une espèce polydisperse.

COTTET H ET AL: "Détermination of dendrigraft poly-L-lysine diffusion coefficients by Taylor dispersion analysis",BIOMACROMOLECULES, AMERICAN CHEMICAL SOCIETY; US,vol. 8, no. 10, 1 octobre 2007 (2007-10-01), pages 3235-3243, traitent le problème de déterminer le coefficient de diffusion et le rayon hydrodynamique d'une espèce polydisperse.

Dans la pratique, il est actuellement considéré comme impossible de résoudre le problème général consistant à déconvoluer le signal de Taylor expérimental d'un échantillon d'un mélange quelconque d'espèces.

L'invention a donc pour but de pallier ce problème, en proposant en particulier un procédé d'analyse en temps réel d'un signal de Taylor expérimental d'un échantillon d'un mélange quelconque.

Pour cela l'invention a pour objet un procédé de détermination de la distribution en taille d'un mélange d'espèces moléculaires ou particulaires, comportant les étapes consistant à :

- injecter un échantillon du mélange à analyser à l'intérieur d'un capillaire dans lequel s'écoule un éluant ;
- transporter l'échantillon injecté le long du capillaire, depuis une section d'injection jusqu'à une section de détection de celui-ci, dans des conditions expérimentales propres à générer un phénomène de dispersion de Taylor qui soit mesurable au niveau de ladite section de détection ;
- générer, au moyen d'un capteur adapté équipant ladite section de détection, un signal caractéristique de la dispersion de Taylor de l'échantillon transporté ;
- traiter ledit signal de détection pour obtenir le signal de Taylor expérimental $\hat{S}(t)$; et,
- analyser (200) ledit signal de Taylor expérimental $\hat{S}(t)$,

caractérisé en ce que ladite étape d'analyse d'un signal de Taylor expérimental $\hat{S}(t)$ d'un échantillon dudit mélange, consiste à rechercher une distribution d'amplitudes $P(G_{(c)})$ permettant de décomposer ledit signal de Taylor expérimental $\hat{S}(t)$ en une somme de fonction gaussiennes selon l'équation :

$$\hat{S}(t) \equiv \int_0^{\infty} P(G_{(c)}) G_{(c)}^{c/2} \exp\left[-(t-t_0)^2 G_{(c)}^c\right] dG_{(c)}$$

où

- $t$ est une variable dont dépend le signal de Taylor expérimental et $t_0$ une valeur de la variable $t$ commune aux différentes fonctions gaussiennes et correspondant au sommet du signal de Taylor expérimental $\hat{S}(t)$;
- $G_{(c)}$ est un paramètre caractéristique d'une fonction gaussienne d'amplitude $P(G_{(c)})$ et est associé :

    - pour $c = 1$, au coefficient de diffusion $D$ d'une espèce selon la relation

$$G_{(1)} = 12D / \left(R_c^2 t_0\right)$$

    - pour $c = -1$, au rayon hydrodynamique $R_h$ d'une espèce selon la relation

$$G_{(-1)} = \frac{2k_B T}{\pi \eta R_c^2 t_0} R_h^{-1} ;$$

et

    - pour $c = -1/d_f = -(1+a)/3$, à la masse molaire M d'une espèce selon la relation

$$G = \frac{2k_B T}{\pi \eta R_c^2 t_0} \left(\frac{10\pi N_a}{3K}\right)^{1/3} M^{-\left(\frac{1+a}{3}\right)},$$

où $k_B$ est la constante de Boltzmann, $T$ est la température absolue exprimée en degré Kelvin à laquelle s'effectue l'expérience, $\eta$ est la viscosité de l'éluant utilisé, $R_c$ est le rayon interne du capillaire utilisé, $N_a$ est le nombre d'Avogadro et $K$ et $a$ sont les coefficients de Mark Houwink, en mettant en oeuvre un algorithme de régularisation contrainte consistant à minimiser une fonction de coût $H_\alpha$ comportant au moins un terme de contrainte associé à une contrainte que doit respecter la distribution d'amplitudes $P(G_{(c)})$ solution de l'équation précédente, la minimisation s'effectuant sur un intervalle d'intérêt des valeurs du paramètre $G_{(c)}$.

Suivant les modes particuliers de réalisation, le procédé comporte une ou plusieurs des caractéristiques suivantes, prise(s) isolément ou suivant toutes les combinaisons techniquement possibles :

- l'équation précédente est discrétisée en subdivisant ledit intervalle de valeurs du paramètre $G_{(c)}$, chaque point de discrétisation $G_m$ étant indexé par un entier m variant entre la valeur unité et la valeur $N$, le point $G_m$ étant distant du point $G_{m-1}$ d'un sous-intervalle de longueur $c_m$ ;
- la fonction de coût prend la forme :

$$H_\alpha = \chi^2 + \alpha^2 \Delta^2$$

où :
- le premier terme $\chi^2$ est un terme de distance entre le signal de Taylor expérimental $\hat{S}(t)$ et un signal de Taylor reconstruit défini par :

$$S'(t) = \sum_{m=1}^{N} c_m P(G_m) \sqrt{G_m} \exp[-(t-t_0)^2 G_m],$$

et

- le second terme $\Delta^2$ est un terme de contrainte associé à ladite au moins une contrainte que doit respecter la distribution d'amplitudes $P(G)$ solution de l'équation précédente, ledit second terme étant introduit par un coefficient de Lagrange $\alpha$, permettant d'adapter la contribution du second terme de la fonction de coût $H_\alpha$ par rapport au premier terme ;
- ledit premier terme $\chi^2$ est une distance du type « moindres carrés » prenant la forme :

$$\chi^2 = \sum_{k=1}^{L} \left( S'(t_k) - \hat{S}(t_k) \right)^2$$

où le signal de Taylor expérimental $\hat{S}(t)$ et la fonction reconstruite $S'(t)$ sont échantillonnés temporellement, chaque échantillon étant indexé par un entier $k$ variant entre la valeur unité et la valeur $L$ ;
- ladite au moins une contrainte que doit respecter la distribution d'amplitudes $P(G)$ solution de l'équation précédente, est une contrainte de régularité associée à un terme de contrainte $\Delta^2$ prenant de préférence la forme :

$$\Delta^2 = \sum_{m=2}^{N-1} \left[ P(G_{m-1}) - 2P(G_m) + P(G_{m+1}) \right]^2 \;;$$

- l'étape d'analyse comporte une étape de détermination de la valeur optimale $\alpha_0$ du coefficient de Lagrange $\alpha$ de manière à ce que la valeur du terme de distance $\chi^2$ correspondant au minimum de ladite fonction de coût $H_{\alpha=\alpha_0}$ soit proche par valeurs inférieures d'une erreur statistique $v$, de préférence de la forme $v = L\text{-}N$ ;
- ledit intervalle d'intérêt des valeurs du paramètre $G_{(c)}$ étant délimité par une borne inférieure $G_{\min}$ et une borne supérieure $G_{\max}$, le procédé comporte une étape de détermination des valeurs des bornes inférieure et supérieure ;
- il comporte une étape de décomposition en cumulants d'un signal de Taylor normalisé $s(t)$ associé au signal de Taylor expérimental $\hat{S}(t)$ par le relation : $s(t)=S(t)/S(t_0)$, consistant à ajuster à la courbe $\ln[s(t)]$ un polynôme du second ordre de la variable $(t\text{-}t_0)^2$ de manière à déterminer les cumulants de premier ordre $\Gamma_1$ et de second ordre $\Gamma_2$, et en ce que ladite étape de détermination des valeurs des bornes inférieure $G_{\min}$ et supérieure $G_{\max}$ utilise les équations :

$$\beta = \ln \Gamma_1 - \ln\left(1 + \frac{\Gamma_2}{\Gamma_1^2}\right) \text{ et } \gamma = \sqrt{\ln\left(1 + \frac{\Gamma_2}{\Gamma_1^2}\right)}$$

où $\beta$ et $\gamma$ sont respectivement la moyenne et l'écart-type du logarithme du paramètre G d'une distribution log-normale, puis,

$$G_{\min} = \exp\left(\beta - k\sqrt{2}\gamma\right) \text{ et } G_{\max} = \exp\left(\beta + k\sqrt{2}\gamma\right) \;;$$

- ladite étape de détermination des valeurs des bornes inférieure et supérieure de l'intervalle d'intérêt est empirique et consiste à :
- déterminer un signal de Taylor normalisé $s(t)$ associé au signal de Taylor expérimental $\hat{S}(t)$ par la relation : $s(t)=S(t)/S(t_0)$,
- calculer le logarithme $\ln[s(t)]$,
- déterminer la dérivée $\dfrac{\partial \ln s}{\partial x}$ par rapport à la variable x = $(t\text{-}t_0)^2$, et
- déterminer les valeurs des paramètres $\tau_{\min}$ et $\tau_{\max}$ reliés aux extrema de ladite dérivée selon les relations :

$$\tau_{\min} = a_{\min}\left(\left|\frac{\partial \ln s}{\partial x}\right|_{\max}\right)^{-1/2}$$

$$\tau_{\max} = a_{\max} \left( \left| \frac{\partial \ln s}{\partial x} \right|_{\min} \right)^{-1/2}$$

avec $a_{\min} = 0{,}1$ ; $a_{\max} = 3$

- déterminer les bornes inférieure $G_{\min}$ et supérieure $G_{\max}$ en utilisant les équations :

  - pour c=1 : $G_{\min} = \tau_{\max}^{-2}$ , $G_{\max} = \tau_{\min}^{-2}$ ,

  - pour c=1 : $G_{\min} = \tau_{\min}^{2}$ , $G_{\max} = \tau_{\max}^{2}$ ,

- pour c=-1/$d_f$ = -(1+a)/3 : $G_{\min} = \tau_{\min}^{\left(\frac{6}{1+a}\right)}$ , $G_{\max} = \tau_{\max}^{\left(\frac{6}{1+a}\right)}$ ;

- il comporte une étape de mesure d'une moyenne en $T$, $\langle G \rangle_T$, du paramètre $G_{(1)}$ à partir du signal de Taylor expérimental et/ou d'une moyenne en $\Gamma$, $\langle G \rangle_\Gamma$, du paramètre $G_{(1)}$ à partir de la décomposition en cumulants, chaque moyenne pouvant être utilisée dans une contrainte que doit respecter la distribution d'amplitudes $P(G_{(1)})$ solution de l'équation précédente ;

- ladite étape de détermination des valeurs des bornes inférieure $G_{\min}$ et supérieure $G_{\max}$ utilise les équations :

$$\beta = \frac{1}{3}\ln\langle G \rangle_\Gamma + \frac{2}{3}\ln\langle G \rangle_T$$

$$\gamma = \sqrt{\frac{2}{3}\ln\frac{\langle G \rangle_\Gamma}{\langle G \rangle_T}}$$

puis

$$G_{\min} = \exp\left(\beta - k\sqrt{2}\gamma\right) \text{ et } G_{\max} = \exp\left(\beta + k\sqrt{2}\gamma\right).$$

L'invention a également pour objet un support d'enregistrement d'informations, comportant des instructions pour l'exécution d'un procédé de détermination de la distribution en rayon hydrodynamique ou en coefficient de diffusion ou en masse molaire d'un mélange d'espèces moléculaires ou particulaires tel que défini ci-dessus, lorsque les instructions sont exécutées par un calculateur électronique.

L'invention a enfin pour objet un système de détermination de la distribution en rayon hydrodynamique ou en coefficient de diffusion ou en masse molaire d'un mélange d'espèces moléculaires ou particulaires, comportant un calculateur électronique, ledit calculateur électronique étant programmé pour exécuter un procédé de détermination de la distribution en rayon hydrodynamique ou en coefficient de diffusion ou en masse molaire d'un mélange d'espèces moléculaires ou particulaires tel que défini ci-dessus.

D'autres caractéristiques et avantages de l'invention ressortiront plus clairement de la description détaillée qui va suivre, donnée à titre indicatif et nullement limitatif, et faite en se référant aux dessins annexés, sur lesquels :

- La figure 1 est une représentation schématique d'un système de détermination de la distribution en taille d'un mélange de particules ;
- la figure 2 est une représentation, sous forme de blocs, du procédé de détermination en taille d'un mélange de particules, mis en oeuvre par le système de la figure 1 ; et,

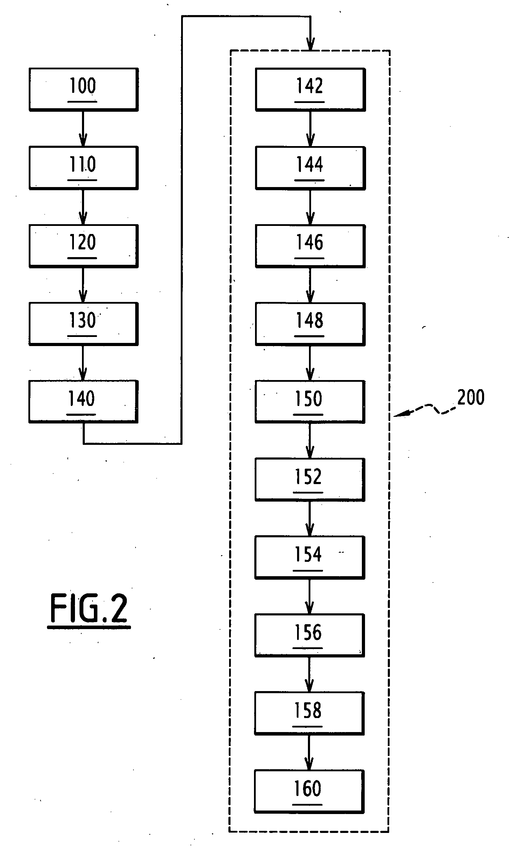

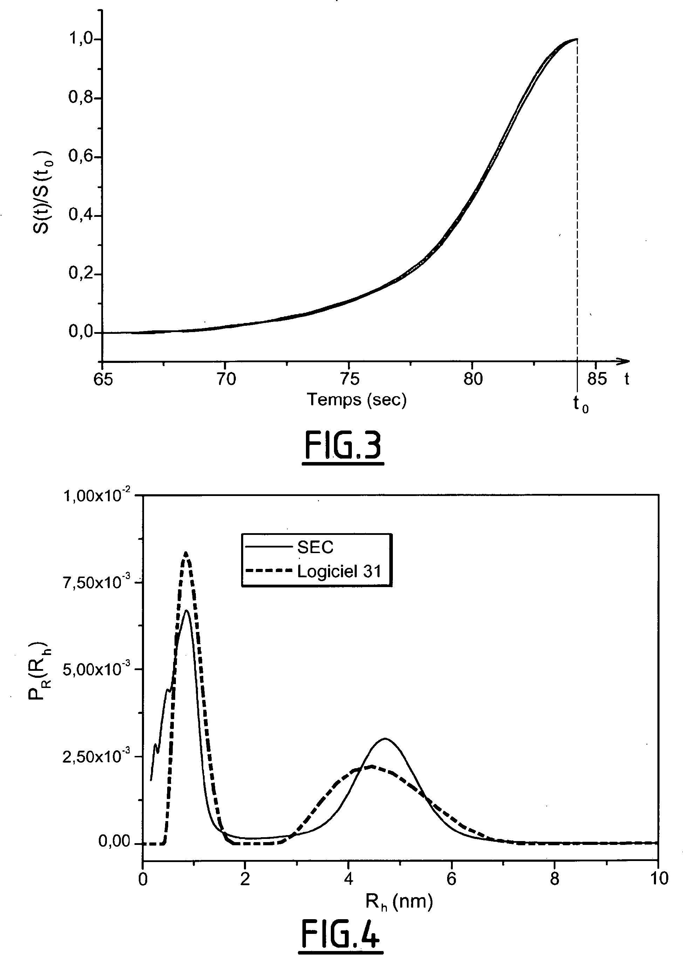

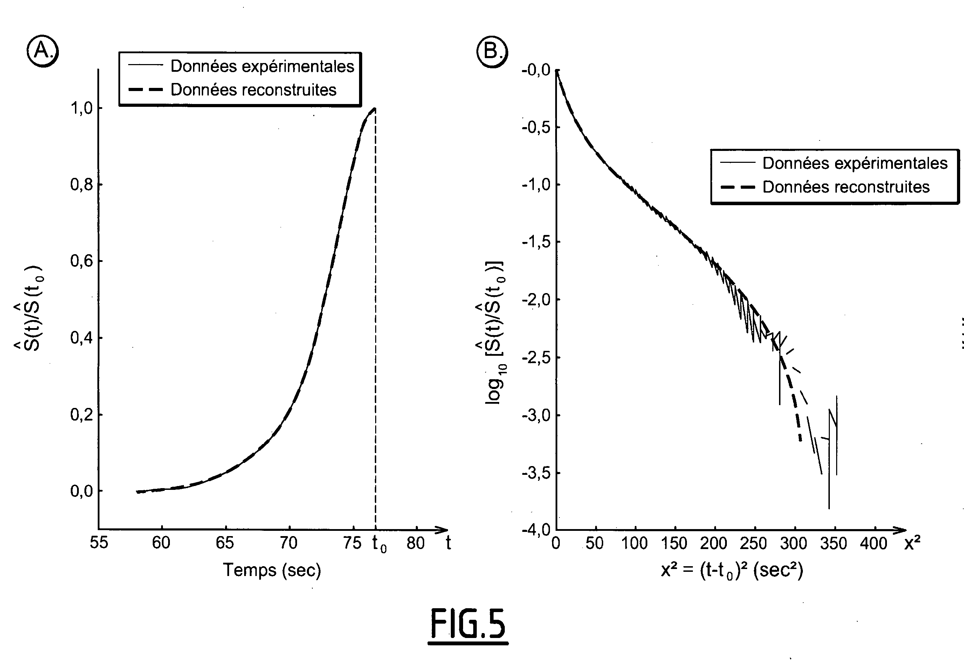

- les figures 3 à 5 sont des graphes représentant les résultats de la mise en oeuvre du procédé de la figure 2 dans le cas d'un mélange équimassique de deux échantillons de polymères synthétiques : la figure 3 présente l'accumulation de trois répétitions du signal de Taylor expérimental; la figure 4 montre la distribution de rayon hydrodynamique obtenue par la mise en oeuvre du procédé de la figure 2, en comparaison de celle obtenue par chromatographie d'exclusion stérique et donnée par le fournisseur des échantillons de polymères synthétiques ; et, la figure 5A montre l'ajustement du signal de Taylor par le procédé de la figure 2 et la figure 5B la décomposition en cumulants du signal de Taylor expérimental de la figure 3.

**Dispositif expérimental**

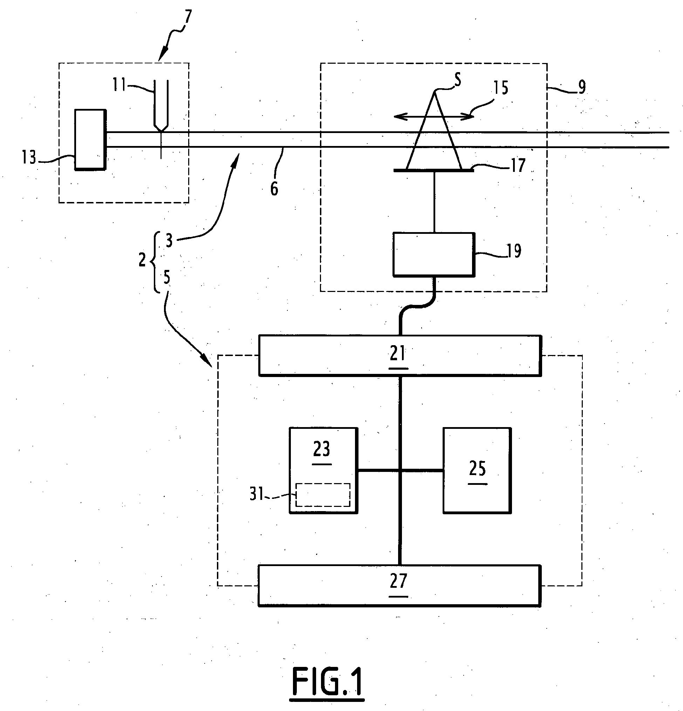

En se référant à la figure 1, le système de détermination en taille d'un mélange de particules 2 comporte un dispositif expérimental 3, propre à générer un phénomène de dispersion de Taylor et à générer un signal de Taylor expérimental, et un dispositif d'analyse 5, propre à analyser le signal de Taylor expérimental obtenu en sortie du dispositif expérimental 3 afin de déterminer, en temps réel, la distribution en taille du mélange de particules dont un échantillon a été injecté dans le dispositif expérimental.

Le dispositif expérimental 3 comporte, comme connu en soi, un capillaire 6.

Le dispositif expérimental 3 comporte, au voisinage d'une extrémité du capillaire 6, une section d'injection 7, et au voisinage de l'autre extrémité du capillaire 6, une section de détection 9.

La section d'injection 7 comporte un moyen 11 conçu pour l'injection, à l'intérieur du capillaire 6, d'un échantillon du mélange à analyser. La section d'injection 7 comporte également des moyens conçus pour autoriser l'écoulement d'un éluant à l'intérieur du capillaire 6, depuis la section d'injection 7 jusqu'à la section de détection 9. Ces moyens d'écoulement sont représentés schématiquement sur la figure 1 par le bloc 13.

La section de détection 9 est du type optique. Elle est équipée d'une cellule optique qui comporte une source de lumière S, et un système optique 15, propre à faire converger les rayons lumineux issus de la source S sur une portion étroite du capillaire 6. Le long de l'axe optique du système optique 15, mais de l'autre côté de la portion du capillaire 6 éclairée, la cellule comporte un capteur 17, du type CCD ou barrette de diode ou photomultiplicateur, propre à collecteur la lumière ayant traversé le capillaire 6 et à générer un signal de détection correspondant à la lumière collectée. Le capteur 17 est connecté électriquement à une carte électronique 19 de prétraitement et de numérisation du signal de détection généré par le capteur 17. La carte 19 délivre en sortie un signal de mesure numérique, qui dépend du temps. Ce signal de mesure est également dénommé signal de Taylor expérimental ou Taylorgramme. Il est noté $\hat{S}(t)$ dans ce qui suit. Il dépend du temps $t$.

Le signal de Taylor expérimental $\hat{S}(t)$ est échantillonné à une fréquence temporelle prédéterminée si bien que les points *d'échantillonnage* $t_k$ ($k = 1,.., L$) sont régulièrement espacés. Le signal de Taylor expérimental $\hat{S}(t)$ consiste ainsi en un ensemble de $L$ paires de données $(t_k, \hat{S}(t_k))$.

En variante, la section de détection peut être d'un autre type, par exemple conductimétrique, par spectrométrie de masse, par fluorescence (éventuellement induite par laser), électrochimique, à diffusion de lumière, et, plus généralement, tout type de détecteur utilisé en électrophorèse capillaire. En particulier, le signal de Taylor peut être non plus un signal temporel (défilement du pic de Taylor devant un capteur étroit), mais un signal spatial (capture instantanée du pic de Taylor devant un capteur étendu). Dans ce cas la variable t ne représente plus le temps mais la position le long du capillaire.

Le dispositif d'analyse 5 consiste en un ordinateur comportant une interface d'entrée/sortie 21 à laquelle la carte électronique 19 du dispositif expérimental 3 est connectée.

L'ordinateur comporte également une mémoire 23, telle qu'une mémoire vive RAM et/ou une mémoire morte ROM, ainsi qu'une unité de calcul 25, telle qu'un microprocesseur. L'ordinateur comporte également des moyens d'interface homme/machine, repérés par le chiffre 27 sur la figure 1. Ceux-ci comportent par exemple un écran tactile permettant à un utilisateur d'interagir avec l'ordinateur 5. L'ensemble des éléments constitutifs de l'ordinateur sont reliés entre eux de manière connue en soi, par exemple par l'intermédiaire d'un bus d'échange de données.

Le traitement du signal de Taylor expérimental $\hat{S}(t)$ est réalisé par un logiciel applicatif dont les instructions sont stockées dans la mémoire 23 et exécutées par l'unité de calcul 25. Ce logiciel applicatif est représenté schématiquement sur la figure 1 par le bloc 31.

**Modélisation du signal de Taylor**

De manière connue, en faisant les hypothèses que i) la contribution de la diffusion selon l'axe du capillaire 6 à la dispersion au niveau du sommet du signal est négligeable, que ii) le temps d'injection de l'échantillon dans le capillaire 6 est suffisamment court (typiquement, le volume injecté est inférieur à 1% du volume du capillaire), et que iii) le dispositif de détection est sensible à la masse des molécules, le signal de Taylor réel $S(t)$ d'un échantillon monodisperse, c'est-à-dire ne comportant qu'une seule espèce et, par conséquent, caractérisé par une valeur du rayon hydrodynamique $R_h$ ou du coefficient de diffusion $D$, est modélisé par une fonction gaussienne :

$$S(t) = CM\rho\sqrt{D}\,exp\left[-(t-t_0)^2\,12D\big/\left(R_c^2 t_0\right)\right] + B. \qquad (1.)$$

où :

- *C* est une constante instrumentale,
- *M* est la masse molaire de l'espèce,
- *ρ* est la concentration molaire de l'espèce,
- *R$_c$* est le rayon interne du capillaire,
- *t$_0$* est l'instant correspondant au sommet du signal de Taylor, et
- *B* est un terme constant (« offset » en anglais) constituant un artefact de mesure (ce terme sera omis dans la description qui va suivre pour des raisons de clarté et puisqu'il est pris en compte dans la méthode de régularisation contrainte).

Il est à souligner que l'hypothèse iii) dépend de la nature du capteur utilisé dans la section de détection et que l'utilisation d'un autre type de capteur conduit à modifier les équation présentées dans ce document d'une manière se trouvant à la portée de l'homme du métier.

Le signal de Taylor réel *S(t)* d'un échantillon polydisperse, c'est-à-dire comportant plusieurs espèces, est modélisé pour la somme des contributions de chacune des espèces. Ainsi, en faisant l'hypothèse d'un mélange comportant un continuum d'espèces, l'équation (1) est généralisée par une somme continue de fonctions gaussiennes selon :

$$S(t) = \int_0^\infty CM(D)\rho(D)\sqrt{D} \exp\left[-(t-t_0)^2 \, 12D/\left(R_c^2 t_0\right)\right]dD , \qquad (2.)$$

Dans l'équation (2), les fonctions gaussiennes sont toutes centrées sur le même instant de référence *t$_0$*.

On introduit le paramètre $G = 12D/\left(R_c^2 t_0\right)$ de sorte que l'équation (2) devienne:

$$S(t) = \int_0^\infty P(G)\sqrt{G} \exp\left[-(t-t_0)^2 G\right]dG , \qquad (3.)$$

où *P(G)* est dite, dans ce qui suit, « distribution d'amplitude » des fonctions gaussiennes de paramètre *G* .

Une valeur du paramètre *G* est associée, à travers le coefficient de diffusion *D*, à une espèce. Par exemple, la formule de Stokes-Einstein-Sutherland permet d'associer à une valeur du paramètre *G* , l'espèce caractérisée par le rayon hydrodynamique *R$_h$*, conformément à la relation :

$$G = \frac{2k_B T}{\pi \eta R_c^2 t_0 R_h} \qquad (4.)$$

où :

- *k$_B$* est la constante de Boltzmann,
- *T* est la température absolue exprimée en degré Kelvin à laquelle s'effectue l'expérience, et
- *η* est la viscosité de l'éluant utilisé.

Ainsi, dans l'équation (3), chaque fonction gaussienne $P(G)\sqrt{G} \exp[-(t-t_0)^2 G]$ représente la contribution d'une espèce à l'amplitude totale du signal de Taylor réel *S(t)*. L'amplitude *P(G)* de chaque fonction gaussienne dépend directement de la concentration de l'espèce correspondante dans le mélange.

La fonction du logiciel applicatif 31 est de déterminer la distribution P(G) qui est solution de l'équation suivante qui correspond à l'équation (3) lorsque l'on remplace le signal de Taylor réel *S(t)* par le signal de Taylor expérimental *Ŝ(t)* :

$$\hat{S}(t) \equiv \int_0^\infty P(G)\sqrt{G} \exp\left[-(t-t_0)^2 G\right]dG \qquad (5.)$$

**Erreur de mesure introduite par le dispositif expérimental**

Comme tout dispositif de mesure, la section de détection 9 introduit une erreur de mesure systématique de sorte que le signal de Taylor expérimental *Ŝ(t)* n'est pas exactement égal au signal de Taylor réel *S(t)*.

La résolution de l'équation (5) conduit alors à la détermination de plusieurs distributions qui sont, chacune, solutions à l'erreur de mesure près. Dit autrement, la résolution de l'équation (5) conduit à identifier plusieurs familles de fonctions gaussiennes qui, chacune, conduisent par sommation à un signal de Taylor reconstruit

$$S'(t) = \int_0^\infty P(G)\sqrt{G}\,\exp\left[-(t-t_0)^2 G\right] dG$$ qui est ajusté au signal de Taylor expérimental $\hat{S}(t)$, le critère d'ajustement tenant compte de l'erreur de mesure introduite par la section de détection.

Pourtant, parmi les différentes distributions $P(G)$ qui sont solutions de l'équation (5), seules certaines d'entre elles possèdent une signification physique. C'est une telle solution « physique » que le logiciel applicatif 31 est apte à déterminer.

### Méthode de détermination de la distribution qui a un sens physique

Pour résoudre ce problème, le logiciel applicatif 31 utilise un algorithme mettant en oeuvre une méthode de régularisation contrainte (« constrained regularization method » en anglais).

Cet algorithme est fondé sur l'équation suivante résultant d'une discrétisation par rapport au paramètre $G$ de l'équation (5) :

$$\hat{S}(t) \equiv \sum_{m=1}^{N} c_m P(G_m)\sqrt{G_m}\,\exp[-(t-t_0)^2 G_m] \tag{6.}$$

où l'intervalle des valeurs d'intérêt du paramètre $G$, entre les bornes prédéfinies inférieure $G_{min} = G_0$ et supérieure $G_{max} = G_N$, est subdivisé en $N$ sous intervalles identifiés par l'entier m et de longueur $c_m$. De préférence, les différents sous intervalles ont une même longueur : $c_m = \dfrac{G_N - G_0}{N}$

Les bornes sont telles que l'intervalle sur lequel l'équation (6) est discrétisée excède l'intervalle pour lequel la distribution $P(G)$ est non nulle. De ce fait $P(G_1) = P(G_N) = 0$.

Les inconnues de l'équation (6) sont constituées par l'ensemble des amplitudes $P(G_m)$, m = 1,...N.

En principe, la résolution de l'équation (6) passe par un processus d'ajustement du signal de Taylor expérimental $\hat{S}(t)$ par le signal de Taylor reconstruit $S'(t) = \sum_{m=1}^{N} c_m P(G_m)\sqrt{G_m}\,\exp[-(t-t_0)^2 G_m]$. C'est-à-dire que pour, tout instant $t_k$, $S'(t_k)$ doit être aussi proche que possible de $\hat{S}(t_k)$.

Afin d'obtenir des résultats robustes et ayant un sens physique, il est cependant nécessaire de prendre en compte toutes les informations disponibles sur les amplitudes $P(G_m)$ lors du processus d'ajustement de façon à rejeter toutes les solutions qui ne sont pas physiquement acceptables.

Pour ce faire, l'algorithme par régularisation contrainte résout l'équation (6) en minimisant une fonction de coût dépendante des $N$ inconnues $P(G_m)$ et traduisant sous forme de contraintes les informations dont on dispose sur les amplitudes $P(G_m)$.

Dans le mode de réalisation actuellement envisagé, la fonction de coût $H_\alpha$ prend la forme suivante :

$$H_\alpha = \chi^2 + \alpha\Delta^2 \tag{7.}$$

Elle comporte un premier terme $\chi^2$ correspondant à une « distance » entre le signal de Taylor expérimental $\hat{S}(t_k)$ et le signal de Taylor reconstruit $S'(t_k)$.

Par exemple, ce premier terme est une distance du type « moindres carrés »:

$$\chi^2 = \sum_{k=1}^{L} \left(S'(t_k) - \hat{S}(t_k)\right)^2 \tag{8.}$$

Une autre mesure de distance pourrait être utilisée, notamment en pondérant, dans la somme précédente, chaque terme par un coefficient $w_k$ inversement proportionnel au bruit affectant la mesure effectuée à l'instant $t_k$.

La fonction de coût $H_\alpha$ comporte un deuxième terme $\Delta^2$, dit terme de contrainte, exprimant une contrainte pénalisant les amplitudes $P(G_m)$ qui n'ont pas de sens physique.

Par exemple :

$$\Delta^2 = \sum\nolimits_{m=2}^{N-1} \left[ P(G_{m-1}) - 2P(G_m) + P(G_{m+1}) \right]^2 \qquad (9.)$$

Dans cet exemple, le terme de contrainte correspond à la somme des termes élevés au carré de la dérivée seconde de la distribution $P(G)$. Le terme de contrainte traduit une contrainte de régularité. Les amplitudes $P(G_m)$ qui varient trop rapidement par rapport à leurs voisines, $P(G_{m-1})$ ou $P(G_{m+1})$, sont ainsi pénalisées.

Un autre exemple de contrainte de régularité est le suivant:

$$\Delta^2 = \sum\nolimits_{m=3}^{N-1} \left[ P(G_{m-2}) - 3P(G_{m-1}) + 3P(G_m) - P(G_{m+1}) \right]^2 \qquad (10)$$

Ce terme de contrainte correspond à la somme des termes élevés au carré de la dérivée troisième de la distribution $P(G)$. La généralisation à une contrainte de régularité fondée sur la dérivée $n$-ème $(n \geq 1)$ est immédiate et à la portée de l'homme du métier.

Dans ce qui suit, il est fait l'hypothèse que la contrainte de régularité utilisée est celle sur la dérivée seconde de la distribution $P(G)$, Eq. (9).

Les premier et deuxième termes de la fonction de coût $H_\alpha$ ont des contributions relatives qui peuvent être adaptées en choisissant la valeur d'un coefficient $\alpha$, dit de Lagrange. Ce coefficient contrôle l'importance du terme de contrainte par rapport au terme de distance. Si $\alpha$ est très petit, le terme de contrainte est négligeable. Dans ce cas, la minimisation de la fonction de coût mène au même résultat qu'un simple ajustement aux données expérimentales. Pour des valeurs trop grandes de $\alpha$, au contraire, un coût important est donné à la contrainte sur les $P(G)$ et l'algorithme rejettera les solutions qui ne respectent pas la contrainte avec le risque de conserver une solution qui ne s'ajuste pas correctement aux données expérimentales.

Des contraintes supplémentaires, exprimables sous forme d'égalités où d'inégalités linéaires en $P(G_m)$ sont imposées directement lors de la recherche du minimum de la fonction de coût, en limitant la recherche à des sous régions spécifiques de l'espace des $P(G_m)$.

Par exemple la contrainte que les amplitudes sont positives, $P(G_m) \geq 0 \; \forall m$, est imposée en minimisant la fonction de coût uniquement sur le demi-espace des amplitudes positives.

Par exemple encore, si l'on détermine par ailleurs la valeur d'une moyenne $\langle G \rangle$ du paramètre G, une contrainte supplémentaire sur les amplitudes $P(G_m)$ solutions de l'équation (6) est que ces amplitudes permettent d'obtenir la moyenne $\langle G \rangle$ précédemment déterminée, à un écart $\varepsilon$ près. Cette contrainte s'exprime elle aussi sous forme d'inégalités linéaires en $P(G_m)$

$$\langle G \rangle - \varepsilon \leq \sum\nolimits_{m=1}^{N} P(G_m) G_m \leq \langle G \rangle + \varepsilon \qquad (11)$$

Avec, par exemple : $\varepsilon / \langle G \rangle = 5\%$.

L'équation 12 peut facilement être généralisée à des types de moyennes autres que la moyenne arithmétique :

$$\langle G \rangle = \sum\nolimits_{m=1}^{N} P(G_m) G_m \qquad (12)$$

par exemple aux moyennes $\langle G \rangle_T$ et $\langle G \rangle_\Gamma$ qui seront introduites dans la suite.

Un point crucial est le choix du coefficient $\alpha$ de la fonction de coût $H_\alpha$ Dans l'équation 7. Deux stratégies peuvent être utilisées pour le choix du coefficient $\alpha$:

- Une première stratégie consiste à choisir la plus grande valeur de $\alpha$ telle que la valeur du terme de distance $\chi^2$ ne dépasse pas la valeur statistiquement attendue qui dépend de l'erreur de mesure et du nombre de degré de liberté dans le processus de régularisation contrainte. Ainsi, si pour chaque point expérimental, l'écart type de l'erreur de mesure $\sigma_k$, est connu, $\alpha$ est choisi pour que la valeur normalisée $\chi^2_{norm}$ du terme de distance $\chi^2$ n'excède pas le nombre de degrés de liberté : $v = L-N$, où $\chi^2_{norm}$ est donné par l'équation :

$$\chi^2_{norm} = \sum\nolimits_{k=1}^{N} \frac{\left( S'(t_k) - \hat{S}(t_k) \right)^2}{\sigma_k^2} \qquad (10.)$$

Si l'écart type du bruit $\sigma_k$ n'est pas connue, une valeur estimée $\sigma_{est}$ de celui-ci peut être déterminée à partir de l'écart moyen entre les données expérimentales et le meilleur ajustement possible sans tenir compte de la contrainte, c'est-à-dire celui obtenu pour $\alpha = 0$, :

$$\sigma_{est}^2 = \frac{1}{N} \sum_{k=1}^{N} \left( S'(t_k)(\alpha = 0) - \hat{S}(t_k) \right)^2 , \tag{11.}$$

où $S'(t_k)(\alpha = 0)$ est la valeur du $k$-ième point de signal de Taylor reconstruit à partir des amplitudes $P(G_m)$ obtenues en minimisant uniquement le premier terme de la fonction de coût $H_{\alpha=0}$.

Une fois le bruit estimé, $\alpha$ est choisi pour que la valeur normalisée $\chi_{norm}^2$ du terme de distance $\chi^2$, calculée en remplaçant dans l'équation (12) les $\sigma_k$ par $\sigma_{est}$, n'excède pas le nombre de degrés de liberté : $v = L\text{-}N$

- Une seconde stratégie consiste à choisir une valeur de $\alpha$ qui donne un poids égal au terme de distance et au terme de contrainte.

Dans ce cas, le paramètre $\alpha$ retenu est celui pour lequel, une fois la fonction de contrainte $H_\alpha$ minimisée, on a $\chi^2 = \alpha\Delta^2$.

En pratique, le choix de $\alpha$ se fait alors en balayant une large gamme de valeurs du coefficient $\alpha$. Pour chaque valeur de $\alpha$, l'ensemble des amplitudes $P(G_m)$ minimisant la fonction de coût $H_\alpha$ est déterminé. Les valeurs correspondantes de $\chi_{norm}^2$, $H_\alpha$ et $P(G_m)$ sont enregistrées. Parmi tous les essais, le coefficient de Lagrange $\alpha_0$ ayant la valeur la plus grande telle que $\chi_{norm}^2 \leq v$ est finalement retenu.

Pour améliorer l'efficacité de recherche numérique, on balaye d'abord les valeurs de $\alpha$ sur une grille d'essai à pas important, puis raffiner la valeur de $\alpha$ en utilisant une grille à pas plus fin.

**Détermination de $\langle G \rangle_T$ et de $\langle G \rangle_\Gamma$ à partir d'un signal de Taylor expérimental**

Dans ce qui suit, sont présentées deux moyennes de $G$ qui peuvent être obtenues directement à partir du signal de Taylor expérimental.

On définit la « moyenne en $T$ » du paramètre $G$ par :

$$\langle G \rangle_T = \frac{\sum_{m=1}^{N} c_m P(G_m)}{\sum_{m=1}^{N} c_m \dfrac{P(G_m)}{G_m}} = \frac{1}{\left[ G^{-1} \right]} \tag{12.}$$

et la « moyenne en $\Gamma$ » du paramètre G par :

$$\langle G \rangle_\Gamma = \frac{\sum_{m=1}^{N} c_m P(G_m) G_m^{3/2}}{\sum_{m=1}^{N} c_m P(G_m) G_m^{1/2}} , \tag{13.}$$

où les $c_m$ sont ceux définis en relation avec l'équation (6).

Le but de la détermination de ces moyennes est double :

- permettre d'ajouter des contraintes sur les amplitudes $P(G_m)$ lors de la résolution de l'équation (6) ;
- permettre d'estimer la moyenne et la largeur de la distribution $P(G)$. Cette information est non seulement intéressante en elle-même, mais elle permet également de déterminer l'intervalle des valeurs du paramètre $G$ sur lequel rechercher une solution de l'équation (6).

$\langle G \rangle_T$ et $\langle G \rangle_\Gamma$ peuvent être calculées respectivement, à partir de la variance temporelle du signal de Taylor expérimental, et à partir de l'approche des cumulants comme présenté ci-dessous.

*Détermination de $\langle G \rangle_T$ à partir de la variance temporelle du signal de Taylor expérimental*

On montre que :

$$\frac{\int_0^{+\infty} S(t)dt}{\int_0^{+\infty} S(t)(t-t_0)^2 dt} \approx \frac{\int_{-\infty}^{+\infty} S(t)dt}{\int_{-\infty}^{+\infty} S(t)(t-t_0)^2 dt} = \frac{\sqrt{\pi}\int_0^{+\infty} P(G)dG}{\frac{\sqrt{\pi}}{2}\int_0^{+\infty} G^{-1}P(G)dG} = 2\left[\overline{G^{-1}}\right]^{-1} = 2\langle G \rangle_T \quad (14.)$$

Ainsi, la moyenne en $T$ du paramètre $G$ est accessible par intégration du signal de Taylor expérimental.

Avec $G = 12D / \left(R_c^2 t_0\right)$, la moyenne en $T$ du paramètre D est donnée par :

$$\langle D \rangle_T = \frac{R_c^2 t_0}{24} \frac{\int_0^{+\infty} S(t)dt}{\int_0^{+\infty} S(t)(t-t_0)^2 dt} \quad (15.)$$

*Détermination de $\langle G \rangle_\Gamma$ à partir d'une décomposition en cumulants du signal de Taylor expérimental*

On décrit dans cette partie la décomposition en cumulants du signal de Taylor expérimental dans le cas d'un échantillon modérément polydisperse.

On suppose que la distribution en taille est discrète. L'équation (2) devient alors :

$$S(t) = C' \sum_{i=1}^N \rho_i M_i \sqrt{D_i} \, exp\left[-(t-t_0)^2 12D_i / \left(R_c^2 t_0\right)\right] \quad (16.)$$

où $\rho_i$ est la concentration molaire de la $i^{ème}$ espèce dans le mélange, $M_i$ et $D_i$ respectivement les masse molaire et coefficient de diffusion de celle-ci.

Il est utile de « normaliser » le signal de Taylor par rapport à la hauteur de son sommet, en introduisant :

$$s(t) = S(t)/S(t_0) = \sum_{i=1}^N f_i \exp\left[-(t-t_0)^2 G_i\right], \quad (17.)$$

où :

- $G_i = 12D_i / \left(R_c^2 t_0\right)$ et,

- $f_i = \rho_i M_i \sqrt{D_i} / \sum_{i=1}^N \left(\rho_i M_i \sqrt{D_i}\right)$ est la contribution relative de la $i^{ème}$ espèce dans le signal de Taylor. Notons que $f_i$ dépend du coefficient de diffusion de la ième espèce.

La moyenne en r du paramètre G s'écrit alors :

$$\langle G \rangle_\Gamma \equiv \frac{\sum_{i=1}^N \rho_i M_i \sqrt{D_i} G_i}{\sum_{i=1}^N \rho_i M_i \sqrt{D_i}} = \sum_{i=1}^N f_i G_i \quad . \quad (18.)$$

En posant $G_i = \langle G \rangle_\Gamma + \delta G_i$, avec $\langle \delta G \rangle_\Gamma = 0$, l'équation (19) devient :

$$s(t) = \exp\left[-(t-t_0)^2 \langle G \rangle_\Gamma \right] \sum_{i=1}^{N} f_i \exp\left[-(t-t_0)^2 \delta G_i\right], \qquad (19.)$$

qui est le produit d'une fonction gaussienne par des termes de correction.

Si $(t-t_0)^2 \delta G_i$ <<1, c'est-à-dire à proximité du sommet du signal de Taylor, le développement limité du second terme de l'équation (21) conduit à :

$$\exp\left[-(t-t_0)^2 \delta G_i\right] = 1 - (t-t_0)^2 \delta G_i + \frac{1}{2}\left[(t-t_0)^2 \delta G_i\right]^2 + \ldots \qquad (20.)$$

Ce qui conduit, dans l'équation (21), en utilisant $\sum_{i=1}^{N} f_i = 1$ et $\sum_{i=1}^{N} \delta G_i = 0$ à :

$$s(t) = \exp\left[-(t-t_0)^2 \langle G \rangle_\Gamma \right]\left(1 + \frac{1}{2}(t-t_0)^4 \langle \delta G^2 \rangle_\Gamma + \ldots \right) \qquad (21.)$$

Dans le cas où la distribution en taille n'est pas trop large (c'est-à-dire pour un échantillon faiblement polydisperse), il est possible d'écrire le signal de Taylor normalisé $s(t)$ comme la somme d'une fonction gaussienne (comme pour le cas d'un échantillon monodisperse) et de termes de correction (pour tenir compte d'un écart au cas monodisperse).

En prenant le logarithme de l'expression (23) et en effectuant un nouveau développement limité, on obtient :

$$\ln[s(t)] = -(t-t_0)^2 \langle G \rangle_\Gamma + \frac{1}{2}(t-t_0)^4 \langle \delta G^2 \rangle \Gamma + \ldots \qquad (22.)$$

L'équation (24) est le développement en cumulant recherché. Les coefficients $\Gamma_1 = \langle G \rangle_\Gamma$ et $\Gamma_2 = \langle \delta G^2 \rangle_\Gamma$ sont les cumulants de premier et de second ordres de ce développement.

Ils peuvent être obtenus en ajustant un polynôme de second ordre de la variable $(t-t_0)^2$ à la fonction $\ln[s(t)]$.

Le premier cumulant donne également accès à la moyenne en $\Gamma$ du coefficient de diffusion :

$$\langle D \rangle_\Gamma = \langle G \rangle_\Gamma \frac{R_c^2 t_0}{12} = \Gamma_1 \frac{R_c^2 t_0}{12} . \qquad (23.)$$

La moyenne en $\Gamma$ est différente de la moyenne en *T* discutée précédemment car le coefficient de diffusion *Dy* apparaît avec des puissances différentes. Ces deux moyennes contiennent des informations différentes sur la distribution *P(G)*. Elles permettent d'ajouter deux contraintes dans la fonction de coût à minimiser.

Le deuxième cumulant est relié à la moyenne en r de la variance de la distribution des coefficients de diffusion, ce qui donne une estimation de la polydispersité de l'échantillon. Plus précisément, le rapport du second cumulant divisé par le carré du premier cumulant donne :

$$\frac{\Gamma_2}{\Gamma_1^2} = \frac{\langle \delta G^2 \rangle_\Gamma}{\langle G \rangle_\Gamma^2} = \frac{\langle D^2 \rangle_\Gamma - \langle D \rangle_\Gamma^2}{\langle D \rangle_\Gamma^2} = \frac{\dfrac{\overline{D^{5/2}}}{\overline{D^{1/2}}} - \left(\dfrac{\overline{D^{3/2}}}{\overline{D^{1/2}}}\right)^2}{\left(\dfrac{\overline{D^{3/2}}}{\overline{D^{1/2}}}\right)^2} \qquad (24.)$$

## Choix de l'intervalle des valeurs du paramètre *G* sur lequel rechercher une solution

Dans la procédure d'ajustement par régularisation contrainte, le choix de l'intervalle des valeurs de G sur lequel la distribution *P(G)* est recherchée est un facteur important.

En effet, le nombre $N$ de points utilisés dans la discrétisation de l'équation (6) ne peut pas être trop important, sinon le temps de calcul pour l'ajustement devient trop long.

De plus, $N$ doit être significativement plus petit que le nombre $L$ de points de numérisation du signal de Taylor expérimental.

Des valeurs typiques de $N$ sont dans la gamme 50-200.

Ces considérations montrent que l'intervalle $[G_{min}, G_{max}]$ ($G_{min} = G_0$ et $G_{max} = G_N$) doit être choisi avec précaution.

Cependant, l'intervalle $[G_{min}, G_{max}]$ doit être plus grand que l'intervalle sur lequel la distribution $P(G)$ est non nulle, pour éviter d'introduire des artefacts dus à la troncature de cette distribution.

Par ailleurs, si l'intervalle sur lequel la distribution $P(G)$ est non nulle est un sous intervalle trop étroit de l'intervalle $[G_{min}, G_{max}]$, les détails de la distribution $P(G)$ seront faiblement résolus lors de la discrétisation.

Il est par ailleurs primordial de définir une procédure automatique permettant de déterminer $G_{min}$ et $G_{max}$ de façon à ce que l'utilisateur ne perde pas de temps à bien choisir les bornes de l'intervalle, en évitant une succession d'essais/erreurs.

Nous proposons trois approches possibles pour déterminer $G_{min}$ et $G_{max}$. Les deux premières approches sont fondées sur le calcul de la distribution log-normale équivalente, tandis que la troisième est empirique et est fondée sur la représentation de $\ln[S(t)]$ en fonction de $(t-t_0)^2$ dans le même système d'axes que celui utilisé pour la décomposition en cumulants.

### Détermination de cet intervalle à partir d'une distribution log-normale

### Distribution log-normale équivalente

Une distribution log-normale permet souvent de décrire assez correctement la distribution en taille d'un échantillon de polymère ou de particules :

$$PDF(G) = \frac{1}{G\gamma\sqrt{2\pi}} \exp\left[-\frac{(\ln G - \beta)^2}{2\gamma^2}\right] \qquad (25.)$$

où :

- $PDF(G)$ est la densité de probabilité que les particules de l'échantillon aient une valeur de G comprise entre $G$ et $G+dG$ ; et,
- $\beta$ et $\gamma$ sont respectivement la moyenne et l'écart type du logarithme du paramètre $G$, $\ln G$.

Bien que la distribution log-normale puisse être un mauvais modèle pour des mélanges plus complexes, la détermination de la distribution log-normale équivalente d'un mélange quelconque est utile pour estimer l'intervalle des valeurs du paramètre $G$ sur lequel la distribution $P(G)$ solution de l'équation (6) est à rechercher.

La densité de probabilité $PDF(G)$ dépend uniquement des deux paramètres $\beta$ et $\gamma$. Or, il est possible de déterminer ces deux paramètres à partir de $\langle G \rangle_T$ et $\langle G \rangle_\Gamma$.

On a par définition :

$$\langle G \rangle_T = \left[\int_0^\infty G^{-1} PDF(G) dG\right]^{-1} \qquad (26.)$$

$$\langle G \rangle_\Gamma = \frac{\int_0^\infty G^{3/2} PDF(G) dG}{\int_0^\infty G^{1/2} PDF(G) dG} \qquad (27.)$$

En remplaçant l'équation (27) dans les équations (28) et (29), on obtient:

$$\beta = \frac{1}{3}\ln\langle G\rangle_\Gamma + \frac{2}{3}\ln\langle G\rangle_T \qquad (28.)$$

$$\gamma = \sqrt{\frac{2}{3}\ln\frac{\langle G\rangle_\Gamma}{\langle G\rangle_T}} \qquad (29.)$$

Il est aussi possible d'obtenir la distribution log-normale équivalente à partir des cumulants de premier et de second ordre selon les relations suivantes :

$$\beta = \ln\Gamma_1 - \ln\left(1+\frac{\Gamma_2}{\Gamma_1^2}\right) \qquad (30.)$$

$$\gamma = \sqrt{\ln\left(1+\frac{\Gamma_2}{\Gamma_1^2}\right)} \qquad (31.)$$

En conclusion, il est possible de déterminer la distribution log-normale soit à partir de $\langle G\rangle_T$ et $\langle G\rangle_\Gamma$ selon les équations (30) et (31) ou bien à partir de $\Gamma_1$ et $\Gamma_2$ en utilisant les équations (32) et (33).

**Calcul des bornes de l'intervalle à partir de la distribution log-normale équivalente**

Les $G_{min}$ et $G_{max}$ peuvent être estimés en remplaçant la distribution $P(G)$ par une distribution log-normale équivalente.

On cherche à ce que l'intervalle [$G_{min}$, $G_{max}$] couvre une fraction significative de la distribution log-normale équivalente au signal de Taylor expérimental. Cette fraction de la distribution est donnée par :

$$\Delta Q_G = Q_G(G_{max}) - Q_G(G_{min}), \qquad (32.)$$

où $Q_G(G)$ est la probabilité cumulée définie par :

$$Q_G(G) = \int_0^G dG' \, PDF(G'). \qquad (33.)$$

De plus, il est préférable que l'intervalle [$Q_G(G_{min})$, $Q_G(G_{max})$] soit réparti de façon symétrique par rapport à la valeur médiane $Q_G = 1/2$. D'où :

$$Q_G(G_{min}) = 1 - Q_G(G_{max}) \qquad (34.)$$

Dans le cadre de cette hypothèse, l'équation (36) conduit :

$$erf\left(\frac{\ln G_{max} - \beta}{\sqrt{2}\gamma}\right) = 2Q_G(G_{max}) - 1 = \Delta Q_G \qquad (35.)$$

où *erf* est la fonction d'erreur connue de l'homme du métier.

Ceci mène à :

$$\ln G_{\max} = \beta + k\sqrt{2}\gamma \text{ soit } G_{\max} = \exp\left(\beta + k\sqrt{2}\gamma\right) \tag{36.}$$

et,

$$\ln G_{\min} = \beta - k\sqrt{2}\gamma, \text{ soit } G_{\min} = \exp\left(\beta - k\sqrt{2}\gamma\right) \tag{37.}$$

avec $k = erf^{-1}(\Delta Q_G)$ où $erf^{-1}$ est la fonction d'erreur inverse.

Par exemple, si $\Delta Q_G = 99.53\%$ alors $k = 2$, ou si $\Delta Q_G = 99.998\%$, alors $k = 3$.

***Détermination de cet intervalle de façon empirique à partir de la décomposition en cumulants***

Par simplicité d'écriture on note ici : $x=(t-t_0)^2$.

Pour un échantillon monodisperse, $\ln[s(t)]$ en fonction de $x$ est une droite dont la pente donne le coefficient de diffusion de l'espèce de l'échantillon. On a :

$$\left|\frac{\partial \ln s}{\partial x}\right| = G \tag{38.}$$

Ainsi, $\partial \ln s/\partial x$ ne dépend pas de $x$, c'est-à-dire qu'il ne dépend pas du temps.

En revanche, pour un échantillon polydisperse, la courbe $\ln[s(t)]$ en fonction de x présente une courbure que l'on calcule en déterminant la dérivée $\partial \ln s/\partial x$. Celle-ci est proportionnelle au paramètre $G$.

En s'inspirant de l'équation (40), on suppose que $G_{\min}$ est relié au minimum de la pente locale de $\ln s$ (en valeur absolue), puisque les espèces à faible coefficients de diffusion correspondent à des faibles valeurs de $G$ et par conséquent à une faible décroissante temporelle du signal de Taylor. Par conséquent, on suppose que :

$$G_{\min} = b_{\min}\left|\frac{\partial \ln s}{\partial x}\right|_{\min} \tag{39.}$$

où le minimum de $|\partial \ln s/\partial x|$ est recherché sur un intervalle adapté de $x$, à déterminer empiriquement, et où $b_{\min}$ est un coefficient numérique, également à déterminer empiriquement.

En étudiant un grand nombre de signaux de Taylor d'échantillons de toute nature, nous avons trouvé que l'intervalle de $x$ adapté est celui pour lequel le signal $s(t)$ décroit de deux décades. Cela correspond à un intervalle de temps entre l'instant $t_0$ correspondant au sommet de $s(t)$ et l'instants tel que $s(t_1)=S(t_1)/S(t_0) = 0{,}01$.

De manière similaire, on considère que :

$$G_{\max} = b_{\max}\left|\frac{\partial \ln s}{\partial x}\right|_{\max} \tag{40.}$$

où le maximum de $|\partial \ln s/\partial x|$ est recherché sur le même intervalle de x.

Lorsqu'on analyse un signal de Taylor expérimental, il est plus simple d'estimer le temps caractéristique de décroissance de $s(t)$. Définissant le temps de décroissance comme $\tau = G^{-1/2}$, on définit des temps de décroissance minimum et maximum à partir des relations précédentes, selon :

$$\tau_{\min} = a_{\min}\left(\left|\frac{\partial \ln s}{\partial x}\right|_{\max}\right)^{-1/2} \tag{41.}$$

$$\tau_{\max} = a_{\max}\left(\left|\frac{\partial \ln s}{\partial x}\right|_{\min}\right)^{-1/2} \tag{42.}$$

En étudiant un grand nombre de signaux de Taylor d'échantillons de toute nature, nous avons trouvé que les valeurs suivantes des paramètres $a_{min}$ et $a_{max}$ permettent d'encadrer les valeurs min et max recherchées :

$$a_{\min} = 0,1 \; ; \; a_{\max} = 3 \text{ , soit } b_{min} = 1/9 \; ; b_{max} = 100 \tag{43.}$$

Finalement, les valeurs $G_{\min}$, $G_{\max}$ à utiliser pour l'ajustement des données sont calculées selon :

$$G_{\min} = \tau_{\max}^{-2} \tag{44.}$$

$$G_{\max} = \tau_{\min}^{-2} \tag{45.}$$

**Calcul des distributions selon le paramètre $D$, $R_h$ ou $M$ à partir de celle selon le paramètre $G$**

Une fois que la distribution des amplitudes $P(G)$ a été obtenue, la distribution des amplitudes $P_D(D)$ selon le coefficient de diffusion $D$, peut facilement être calculée.

L'équation suivante relie la distribution de probabilité $P_y$ de la variable stochastique $y$ à la distribution de probabilité $P_x$ de la variable stochastique $x$, où $x$ est une fonction de $y$:

$$P_y(y) = P_x(x)\Big|_{x=x(y)} \left|\frac{\partial x}{\partial y}\right|_{x=x(y)} \tag{46.}$$

avec $G = 12D/\left(R_c^2 t_0\right)$, on obtient :

$$P_D(D) = \frac{\dfrac{12}{R_c^2 t_0}P(G)\Big|_{G=\frac{12D}{R_c^2 t_0}}}{\displaystyle\int_0^{\infty} P(G)dG} \tag{47.}$$

Expression dans laquelle une intégrale a été introduite au dénominateur car la distribution $P(G)$ n'est pas forcément normalisée.

Il est souvent souhaitable d'exprimer la polydispersité de l'échantillon en termes de distribution des amplitudes selon le paramètre rayon hydrodynamique, $R_h$, ou le paramètre masse molaire, $M$.

Ces deux distributions peuvent être calculées à partir de la distribution $P(G)$ en utilisant l'équation (46) et les lois de transformation suivantes :

$$G = \frac{2k_B T}{\pi \eta R_c^2 t_0} R_h^{-1} \tag{48.}$$

$$G = \frac{2k_B T}{\pi \eta R_c^2 t_0}\left(\frac{10\pi N_a}{3K}\right)^{1/3} M^{-\left(\frac{1+a}{3}\right)} \tag{49.}$$

L'équation (48) utilise la relation de Stokes-Einstein $D = \dfrac{k_B T}{6\pi\eta R_h}$ ,où $k_B$ est la constante de Boltzmann, $T$ la température absolue, et $\eta$ la viscosité de l'éluant.

L'équation (49) utilise l'équation d'Einstein pour la viscosité d'une suspension diluée et l'équation de Mark Houwink reliant la viscosité intrinsèque $[\eta]$ à la masse molaire selon la relation :

$$[\eta] = K M^a \tag{50.}$$

où $K$ et $a$ sont les coefficients de Mark Houwink.

Peut également être utilisée la relation suivante donnant le rayon hydrodynamique en tant que fonction de la masse molaire :

$$R_h = \left(\frac{3K}{10\pi N_a}\right)^{1/3} M^{\left(\frac{1+a}{3}\right)} \tag{51.}$$

où $N_a$ est le nombre d'Avogadro et $d_f = 3/(1+a)$ est la dimension fractale de l'objet (par exemple $d_f = 3$ pour une objet ordinaire compact, 2 pour un polymère statistique et 5/3 pour un polymère dans un bon solvant).

Les équations (48) et (49) montrent que $G$ est non-linéaire en $R_h$ et M, respectivement, alors que $G$ est simplement proportionnel à $D$.

À cause de cette non-linéarité, la transformation de la distribution selon le paramètre G identifié comme la solution de l'équation (6) conduit à une distribution selon le paramètre $R_h$, ou le paramètre $M$, qui ne respecte pas forcément la contrainte de la fonction de coût, en particulier la contrainte de régularité. Dans la majorité des cas, la transformation conduit en effet à la présence de pics ou d'oscillations non physiques dans la distribution selon le paramètre $R_h$, ou le paramètre $M$.

C'est la raison pour laquelle, en variante du procédé présenté en détail ci-dessus, le procédé consiste à rechercher directement, par régularisation contrainte, la distribution selon le paramètre $R_h$, ou le paramètre $M$, qui respecte la ou les contraintes et qui permet de reproduire correctement les données expérimentales.

A cette fin, le signal de Taylor expérimental est décomposé sur une famille de gaussiennes d'un paramètre adapté. L'équation (5) est ainsi généralisée sous la forme :

$$\hat{S}(t) \equiv \int_0^\infty P(G_{(c)}) G_{(c)}^{c/2} \exp\left[-(t-t_0)^2 G_{(c)}^c\right] dG_{(c)} \tag{52.}$$

où les trois cas suivants sont considérés :

    1) c = 1 : à utiliser lorsque l'on cherche la distribution d'amplitude selon D ;
    2) c = -1 : à utiliser lorsque l'on cherche la distribution d'amplitude selon $R_h$ ;
    3) c = -1/$d_f$ = -(1 +a)/3 : à utiliser lorsque l'on cherche la distribution d'amplitude selon M.

$P_{norm}(G_{(c)})$ est la distribution $P(G_{(c)})$ correctement normalisée :

$$P_{norm}(G_{(c)}) = \frac{P(G_{(c)})}{\int_0^\infty P(G_{(c)}) dG_{(c)}} \tag{53.}$$

Pour le cas 1), on a $G_{(1)} = G$. L'équation (54) se réduit alors à l'équation (5). La distribution d'amplitude $P_D(D)$ est déterminée à partir de la distribution d'amplitude $P(G_{(1)})$ en utilisant l'équation suivante :

$$P_D(D) = \frac{12}{R_c^2 t_0} P_{norm}(G_{(1)}) \tag{54.}$$

Pour le cas 2), on a $G_{(-1)} = \dfrac{\pi \eta R_c^2 t_0}{2k_B T} R_h$ .

La mise en oeuvre de l'algorithme de régularisation contrainte conduit à déterminer la distribution d'amplitude $P(G_{(-1)})$. La distribution $P_R(R_h)$ est ensuite déterminée à partir de $P_{norm}(G_{(-1)})$ selon la relation :

$$P_R(R_h) = \frac{\pi \eta R_c^2 t_0}{2k_B T} P_{norm}(G_{(-1)}) . \qquad (55.)$$

Finalement, pour le cas 3), on a $G_{(-(1+a)/3)} = \left(\dfrac{3K}{10\pi N_a}\right)^{\left(\frac{1}{1+a}\right)} \left(\dfrac{\pi \eta R_c^2 t_0}{2k_B T}\right)^{\left(\frac{3}{1+a}\right)} M$ .

La mise en oeuvre de l'algorithme de régularisation contrainte conduit à déterminer la distribution d'amplitude $P(G_{(-(1+a)/3)})$. Puis, la distribution $P_M(M)$ est obtenue au moyen de $P_{norm}(G_{(-(1+a)/3)})$ selon la relation suivante :

$$P_M(M) = \left(\frac{3K}{10\pi N_a}\right)^{\left(\frac{1}{1+a}\right)} \left(\frac{\pi \eta R_c^2 t_0}{2k_B T}\right)^{\left(\frac{3}{1+a}\right)} P_{norm}\left(G_{(-(1+a)/3)}\right) \qquad (56.)$$

La manière de choisir l'intervalle $[G_{(c),min}, G_{(c),max}]$ sur lequel la distribution $P(G_{(c)})$ est à rechercher est similaire à celle décrite précédemment. En particulier, $\tau_{min}$ et $\tau_{max}$ sont calculés selon les équations (43) et (44). Finalement, les valeurs $G_{(c),min}$, $G_{(c),max}$ sont déterminées comme suit :

1) c=1 : $G_{min} = \tau_{max}^{-2}$ , $G_{max} = \tau_{min}^{-2}$ $\qquad$ (57.)

2) c=-1 $G_{min} = \tau_{min}^2$ , $G_{max} = \tau_{max}^2$ $\qquad$ (58.)

3) c= -1/$d_f$ = -(1+a)/3 $G_{min} = \tau_{min}^{\left(\frac{6}{1+a}\right)}$ , $G_{max} = \tau_{max}^{\left(\frac{6}{1+a}\right)}$ $\qquad$ (59.)

**Procédé de détermination de la distribution en taille d'un échantillon**

Le procédé de détermination de la distribution en taille d'un mélange de particules va maintenant être décrit par référence à la figure 2.

Le procédé comporte une première étape 100 d'injection d'un échantillon à analyser dans la section d'injection 7 du dispositif expérimental 3.

Puis à l'étape 110, après actionnement des moyens 13 assurant l'introduction et la mise en circulation d'un éluant à l'intérieur du capillaire 6, l'échantillon injecté est transporté depuis la section d'injection 7, jusqu'à la section de détection 9 du dispositif expérimental 3. Les conditions expérimentales (nature de l'éluant, vitesse d'écoulement de l'éluant, longueur de transport séparant la section d'injection de la section de détection, température, rayon interne du capillaire, etc.) sont adaptées pour que se développe un phénomène de dispersion de Taylor détectable au niveau de la section de détection 9. Dans les exemples expérimentaux ci-dessous, des conditions expérimentales précises sont indiquées.

A l'étape 120, l'échantillon transporté par l'éluant passe à travers la cellule optique de la section de détection 9. Le capteur 17 génère alors un signal électrique de mesure caractéristique de la dispersion de Taylor dont l'échantillon a été le siège.

A l'étape 130, le signal de détection généré par le capteur 17 est traité par la carte électronique 19 de manière à délivrer un signal de Taylor expérimental $\hat{S}(t)$ numérisé.

A l'étape 140, le signal de Taylor expérimental $\hat{S}(t)$ est acquis par l'ordinateur 5.

Il est ensuite analysé (étape 200) par l'exécution du logiciel applicatif 31 afin de déterminer une distribution en taille. Le logiciel applicatif 31 effectue les étapes élémentaires suivantes.

A l'étape 142, un premier menu adapté est présenté à l'utilisateur afin qu'il choisisse le paramètre selon lequel la méthode régularisation contrainte doit être effectuée. L'utilisateur peut ainsi choisir soit le coefficient de diffusion D (cas 1, c=1), le rayon hydrodynamique (cas 2, c=-1) ou la masse molaire $M$ (cas 3, c= -1/$d_f$). L'utilisateur est également invité à choisir le nombre $N$ pour la discrétisation de la distribution à rechercher. Dans ce qui suit, pour des raisons de simplification, il est fait l'hypothèse que l'utilisateur choisit le coefficient de diffusion D et que le paramètre à prendre en compte est le paramètre $G$.

A l'étape 144, un second menu adapté est présenté à l'utilisateur afin qu'il choisisse le nombre et la nature des contraintes dont il faut tenir compte dans la recherche de la distribution solution de l'équation (5). Les contraintes proposées à la sélection sont par exemple :

1. régularité de la distribution ;
2. la distribution est en tous points positive ;
3. la distribution doit conduire à une moyenne en $T$ prédéterminée plus ou moins un écart que l'on se fixe;
4. la distribution doit conduire à une moyenne en $\Gamma$ prédéterminée plus ou moins un écart que l'on se fixe.

Dans ce qui suit, il est fait l'hypothèse que la première contrainte est implémentée via un multiplicateur de Lagrange dans la fonction de coût, tandis que les autres contraintes sont implémentées directement en limitant de façon approprié l'espace des amplitudes $P(G_m)$ sur lequel un extrema de la fonction de coût est recherché..

A l'étape 146, le signal de Taylor expérimental $\hat{S}(t)$ est décomposé en cumulants. Plus précisément, le signal de Taylor normalisé $s(t) = \hat{S}(t)/\hat{S}(t_0)$ est d'abord déterminé, puis son logarithme $\ln[s(t)]$ est calculé. Enfin, un polynôme de second degré de la variable $(t-t_0)^2$ est ajusté à la fonction $\ln[s(t)]$. Les cumulants de premier et second ordre $\Gamma_1$ et $\Gamma_2$ sont alors déterminés. $\Gamma_1$ permet notamment de mesurer la moyenne en r du paramètre $G$. Par ailleurs, la moyenne en T du signal de Taylor est mesurée.

A l'étape 148, les bornes $G_{min}$ et $G_{max}$ de l'intervalle des valeurs du paramètre G sur lequel la distribution est à rechercher sont calculées à partir de la distribution log-normale équivalente déterminée à partir des valeurs des cumulants de premier et second ordre $\Gamma_1$ et $\Gamma_2$ obtenus à l'étape 148, en utilisant les équations (32) et (33) puis (38) et (39).

A l'étape 150, la fonction de coût $H_\alpha$ est élaborée à partir de la première contrainte sélectionnée par l'utilisateur à l'étape 144. Le terme de contrainte associé à la contrainte sélectionnée est lu dans la mémoire de l'ordinateur 5.

A l'étape 152, l'expression discrétisée de la fonction de coût $H_\alpha$ est obtenue en subdivisant l'intervalle $G_{min}$ et $G_{max}$ déterminé à l'étape 154, en N sous intervalles.

A l'étape 154, pour chaque valeur du coefficient de Lagrange $\alpha$ dans un ensemble dé valeurs d'essai, le minimum de la fonction de coût $H_\alpha$ est déterminé. Pour tenir compte des contraintes strictes selon lesquelles les amplitudes sont positives et doivent conduire à des moyennes en $T$ et en rprédéterminées, à un écart prédéterminé prêt, le minimum de la fonction de coût est recherché uniquement sur le sous espace approprié des amplitudes $P(G_m)$ qui satisfont ces contraintes strictes.

A l'étape 156, l'erreur statistique $v$ est déterminée et la valeur optimale $\alpha_0$ du coefficient de Lagrange $\alpha$ est déterminée en sélectionnant la valeur du coefficient de Lagrange $\alpha$ qui, à l'étape 156, a conduit au terme de distance $\chi^2$ le plus proche par valeurs inférieures à cette erreur statistique $v$.

A l'étape 158, l'ensemble des distributions $P(G)$ recherchées est l'ensemble de celles minimisant la fonction de coût $H_\alpha$ pour la valeur optimale $\alpha_0$ du coefficient de Lagrange déterminée à l'étape 156.

A l'étape 160, la grandeur relative à la taille des particules du mélange est calculée à partir de la distribution $P(G)$ obtenue à l'étape 158.

Enfin, à l'étape 162, par une transformation adaptée, les distributions selon le rayon hydrodynamique ou la masse molaire sont calculées à partir de la distribution $P(G)$ obtenue à l'étape 158.

Eventuellement, les différentes distributions calculées sont affichées sur l'écran de l'ordinateur 5. Le logiciel applicatif 31 comporte des « outils » permettant à l'utilisateur d'effectuer les calculs qu'il souhaite sur les distributions calculées.

Le logiciel applicatif 31 comporte ainsi les moyens adaptés pour la réalisation de chacune des étapes de l'analyse du signal de Taylor expérimental.

En variante, les bornes $G_{min}$ et $G_{max}$ de l'intervalle sur lequel la distribution $P(G)$ est à rechercher sont calculées empiriquement. Cela consiste à déterminer le signal de Taylor normalisé $s(t) = \hat{S}(t)/\hat{S}(t_0)$, à en prendre le logarithme, puis à en calculer la dérivée $|\partial \ln s/\partial x|$. Les bornes de l'intervalle d'intérêt du paramètre G sont finalement déduites en utilisant les équations (43) et (44), puis les équations (46) et (47).

Dans encore une autre variante, indépendante de la précédente, la moyenne en $T$ du paramètre $G$, $\langle G \rangle_T$, est calculée en intégrant le signal de Taylor expérimental $\hat{S}(t)$ en utilisant l'équation (16) et la moyenne en $\Gamma$ du paramètre $G$, $\langle G \rangle_\Gamma$, est calculée à partir de la détermination du cumulant de premier ordre résultant de la décomposition en cumulants du signal de Taylor expérimental. Les bornes $G_{min}$ et $G_{max}$ de l'intervalle sur lequel la distribution en taille est à rechercher sont calculées à partir des moyennes en T et en $\Gamma$ du paramètre G selon les équations (30), (31) et (38), (39). Cette variante du procédé permet aussi d'intégrer à la fonction de coût un terme de contrainte fondé sur l'une ou l'autre de ces moyennes.

**Analyse par régularisation contrainte sur une sérine de signaux de Taylor expérimentaux d'un même échantillon**

L'ajustement par régularisation contrainte peut avantageusement être mis en oeuvre en utilisant plusieurs signaux de Taylor expérimentaux obtenus en répétant des expériences identiques sur un ensemble d'échantillons d'un même mélange.

Bien que chaque répétition puisse être analysée indépendamment et que les distributions d'amplitudes obtenues puissent être moyennées, il s'avère plus robuste d'accumuler les différents signaux de Taylor individuels dans un unique signal de Taylor global qui comporte un nombre de points expérimentaux égal à la somme des points expérimentaux de chaque signal de Taylor individuel. Dans un second temps, la recherche de la distribution d'amplitudes s'effectue sur le signal de Taylor global par application de l'algorithme de régularisation contrainte.

Cela conduit à une distribution d'amplitude $P(G)$ respectant plus précisément la contrainte imposée, par exemple la distribution $P(G)$ est plus régulière. Cela permet également de prendre en compte les incertitudes et les imprécisions affectant l'acquisition des signaux de Taylor individuels.

Lors de cette opération, si l'instant de référence $t_0$ n'est pas rigoureusement identique d'un signal de Taylor expérimental à l'autre, les coordonnées temporelles sont translatées de sorte que tous les signaux de Taylor expérimentaux aient exactement le même instant de référence $t_0$.

La correction de la ligne de base, suivie d'une normalisation de chaque signal de Taylor expérimental peut également être nécessaire avant le traitement.

Le logiciel applicatif 31 comporte un menu permettant à l'utilisateur de traiter plusieurs signaux de Taylor expérimentaux avant d'analyser le signal de Taylor global ainsi obtenu.

**Avantages**

Le procédé venant d'être présenté permet d'obtenir, automatiquement et en temps réel, la distribution en taille d'un mélange d'espèces, ainsi que les concentrations de ces espèces dans le mélange, et ceci quelle que soit la polydispersité de l'échantillon analysé, c'est-à-dire le nombre d'espèces que cet échantillon comporte et les concentrations respectives de celles-ci.

Les domaines d'utilisation du dispositif et du procédé venant d'être décrits concernent la caractérisation en taille des polymères, des colloïde, des nanomatériaux, des latex, des particules, des protéines, des agrégats de protéines, des biopolymères, des émulsions, des liposomes, des vésicules, et des molécules ou biomolécules en général. Un domaine d'utilisation important concerne l'étude, pour l'industrie pharmaceutique, de la stabilité/dégradation/agrégation des protéines.

Les avantages de la caractérisation d'un échantillon par mise en oeuvre du phénomène de dispersion de Taylor sont connus de l'homme du métier : faible volume de l'échantillon à injecter dans le capillaire, pas d'étalonnage nécessaire du dispositif expérimental, utilisation d'un dispositif expérimental extrêmement simple, technique particulièrement bien adaptée à des mesures de taille de particule inférieure à quelques nanomètres, signal généralement sensible à la concentration massique etc.

**Exemples expérimentaux**

***Conditions expérimentales***

Capillaire en silice vierge : $R_{c,}$ = 50 $\mu$m et distance entre section d'injection et de détection de 30 cm.

Température : $T$ = 293 °K
Eluent : tampon borate de sodium 80 mM, pH 9,2.
Viscosité de l'éluant : $\eta$ = 8,9 $10^{-4}$ Pa.s.
Echantillon : polystyrènesulfonate (PSS) à 0,5 g/l.
Injection : 0,3 psi (20 mbar), 9 s, soit un volume injecté de 8 nl (volume total du capillaire 589 nl).
Détection par lumière UV à une longueur d'onde de 200 nm.

***Caractéristiques des standards de polymère injectés***

1) PSS 1290 $M_w$ = 1290 g/mol $M_p$ = 1094 g/mol $M_w/M_n$ < 1,20
2) PSS 5190 $M_w$ = 5190 g/mol $M_p$ = 5280 g/mol $M_w/M_n$ < 1,20
3) PSS 29000 $M_w$ = 29000 g/mol $M_p$= 29500 g/mol $M_w/M_n$ < 1,20

4) PSS 148000 $M_w$ = 145000 g/mol $M_p$ = 148500 g/mol $M_w/M_n$ < 1,20

5) PSS 333000 $M_w$ = 333000 g/mol $M_p$ = 338000 g/mol $M_w/M_n$ < 1,20 où $M_w$ est la masse molaire moyenne en poids, $Mp$ la masse molaire au sommet du pic chromatographique, et $M_w/M_n$ est l'indice de polydispersité. Les masses molaires moyennes et les caractéristiques de la distribution ont été données par le fournisseur qui les détermine par chromatographie d'exclusion stérique avec un étalonnage utilisant des standards de polymère de même nature chimique (PSS).

### *Présentation des signaux de Taylor expérimentaux des polymères étudiés*

La Figure 3 représente un signal de Taylor expérimental obtenus pour un mélange équimassique de PSS 1290 et de PSS 29000. En fait, trois signaux de Taylor expérimentaux sont ici agrégés.

De plus, seule la partie gauche du signal de Taylor expérimental est représentée. En effet, généralement les taylorgrammes sont symétriques. Cependant, dans le cas de phénomène d'adsorption à la surface du capillaire, la partie droite du signal, qui correspond aux instants ultérieurs à l'instant $t_0$, peut ne pas être exactement symétrique de la partie gauche du signal, qui correspond aux instants précédant l'instant $t_0$. Dans ce cas, il est préférable d'axer le traitement des données sur la partie gauche du signal de Taylor expérimental. Avantageusement, le procédé décrit précédemment ne tient compte que de la partie gauche du signal afin de limiter l'influence de ces phénomènes parasites éventuels.

La figure 4 montre la superposition de la distribution $P_R(R_h)$ obtenue par le procédé décrit précédemment (logiciel 31) en comparaison avec la distribution donnée par le fournisseur des polymères et obtenue par une méthode chromatographique (SEC). La Figure 4 montre un bon accord entre la distribution en rayon hydrodynamique donnée par le fournisseur et la distribution obtenue par la mise en oeuvre du logiciel applicatif 31.

La figure 5A montre l'ajustement entre le signal de Taylor expérimental $\hat{S}(t)$ normalisé (Data) et le signal reconstruit $S'(t)$ normalisé (Fit) et la figure 5B montre l'ajustement entre le logarithme du signal de Taylor expérimental $\hat{S}(t)$ normalisé (Data) et le développement en cumulants (Fit).

### *Comparaison des résultats*

Le tableau 1 regroupe des différentes moyennes du coefficient de diffusion $D$ obtenues : directement par décomposition en cumulants (moyenne en $\Gamma$ colonne 2) ou par intégration du taylorgramme (moyenne en $T$ colonne 3), et, d'autre part, par la mise en oeuvre du logiciel applicatif 31 (moyenne en $\Gamma$ colonne 4 et moyenne en $T$ colonne 5). Il est à noter que dans cet exemple, les moyennes mesurées directement sur le signal de Taylor expérimental ne sont pas utilisées pour contraindre la déconvolution de ce signal et seules une contrainte lâche de régularité et une contrainte stricte de positivité ont été utilisées.

Tableau 1

| 1 | 2 | 3 | 4 | 5 |
|---|---|---|---|---|
| Echantillon | $\langle D \rangle_\Gamma$[a] | $\langle D \rangle_T$[b] | $\langle D \rangle_\Gamma$[c] | $\langle D \rangle_T$[c] |
| 1290 | 2,534E-06 | 2,457E-06 | 2,654E-06 | 2,595E-06 |
| 5190 | 1,197E-06 | 1,083E-06 | 1,197E-06 | 1,192E-06 |
| 29000 | 4,754E-07 | 4,222E-07 | 5,152E-07 | 5,135E-07 |
| 145000 | 2,014E-07 | 1,899E-07 | 2,218E-07 | 2.201E-07 |
| 333000 | 1,209E-07 | 1,157E-07 | 1,413E-07 | 1,119E-07 |
| 1290 + 29000 | 1,065E-06 | 8,407E-07 | 1.900E-06 | 8,533E-07 |
| 1290+5190 | 2,137E-06 | 1,555E-06 | 2,082E-06 | 1,812E-06 |
| 5190+29000 | 7,669E-07 | 6,509E-07 | 9,237E-07 | 6,921E-07 |

[a] à partir de la décomposition en cumulants (équation 25)
[b] à partir de l'intégration du taylorgramme (équation 17)
[c] à partir de la distribution donnée par le logiciel 31

Dans l'ensemble, les résultats présentent une grande cohérence et le logiciel 31 mène bien à une solution dont les moyennes en $T$ et en $\Gamma$ (colonnes 4 et 5) sont proches des valeurs expérimentales (colonnes 2 et 3).

Le tableau 2 montre les valeurs des $\tau_{min}$ et $\tau_{max}$ déterminées à partir des différentes approches proposées, à savoir l'approche empirique (colonnes 4 et 5), celle de la décomposition en cumulants (colonnes 6 et 7) à partir des cumulants $\Gamma_1$ et $\Gamma_2$ (colonnes 2 et 3) et celle utilisant les moyennes en $T$ et en $\Gamma$ du coefficient de diffusion (colonnes 8 et 9 à partir du cumulant du premier ordre et de l'intégration du taylorgramme).

Tableau 2

| 1 | 2 | 3 | 4[a] | 5[a] | 6[b] | 7[b] | 8[c] | 9[c] |
|---|---|---|---|---|---|---|---|---|
| Echantillon | $\Gamma_1$, en s$^{-2}$ | $\Gamma_a$, en s$^{-4}$ | $\tau_{min}/a_{min}$ en s$^a$ | $\tau_{max}\,a_{max}$ en s$^a$ | $\tau_{min}/a_{min}$ en s$^b$ | $\tau_{max}/a_{max}$ en s$^b$ | $\tau_{min}/a_{min}$ en s | $\tau_{max}/a_{max}$ en s |
| 1290 | 6,339E-02 | 1.231E-05 | 3,891 | 4,280 | 3,679 | 4,301 | 3,277 | 4,914 |
| 5190 | 3,004E-02 | 5,638E-06 | 5,554 | 5,985 | 5,176 | 6,471 | 4,137 | 8,603 |
| 29000 | 1,189E-02 | 6,307E-06 | 7,595 | 9,052 | 6,975 | 12,593 | 6,408 | 14,203 |
| 145000 | 5,038E-03 | 1,651E-06 | 9,804 | 13,555 | 10,195 | 20,736 | 10,856 | 19,016 |
| 333000 | 3,024E-03 | 5,378E-07 | 11,279 | 30,264 | 13,344 | 26,235 | 14,497 | 23,480 |
| 1290 + 29000 | 2,664E-02 | 8,047E-05 | 4,704 | 8,860 | 4,067 | 10,276 | 3,781 | 11,622 |
| 1290 + 5190 | 5,210E-02 | 2,518E-04 | 4,453 | 7,740 | 3,005 | 6,978 | 2,540 | 9,343 |
| 5190 + 29000 | 1,918E-02 | 2,571E-05 | 6,625 | 9,891 | 5,171 | 10,784 | 4,777 | 12,172 |

[a] approche empirique à partir des équations (43) et (44)
[b] à partir de la décomposition en cumulants (équations (32-33), (38-39) et (46-47))
[c] à partir les moyennes en $T$ et en $\Gamma$ du coefficient de diffusion (équations (17), (25), (30-31), (38-39) et (46-47)).

Les ordres de grandeurs des $\tau_{min}$ et $\tau_{max}$ sont en bon accord quelle que soit la méthode considérée.

Le tableau 3 permet de comparer les valeurs du rayon hydrodynamique moyen obtenues par une décomposition en cumulants (moyenne en $\Gamma$, colonne 2), et par la mise en oeuvre du logiciel applicatif 31 par détermination de la distribution $P(G)$ puis intégration en $\Gamma$ ou en $T$ (colonnes 3 et 6), par la méthode de référence par chromatographie d'exclusion stérique (colonnes 4 et 7) suivant la moyenne considérée, par intégration directe du Taylorgramme sur la totalité du signal (colonne 5). Pour une même moyenne (colonnes 2 à 4, d'une part, et colonne 5 à 7, d'autre part) les résultats sont homogènes sur l'ensemble des échantillons considérés.

On retrouve un bon accord pour l'ensemble des échantillons pour chaque groupe de moyenne considéré.

Tableau 3

| 1 | 2 | 3 | 4 | 5 | 6 | 7 |
|---|---|---|---|---|---|---|
| Echantillon | $\dfrac{kT}{6\pi\eta\left[\langle D\rangle_\Gamma\right]_{cumulant}}$ | $\dfrac{kT}{6\pi\eta\left[\langle D\rangle_\Gamma\right]_{logiciel31}}$ | $\dfrac{kT}{6\pi\eta\left[\langle D\rangle_\Gamma\right]_{SEC}}$ a | $\dfrac{kT}{6\pi\eta\left[\langle D\rangle_T\right]_{Taylor}}$ b | $\dfrac{kT}{6\pi\eta\left[\langle D\rangle_T\right]_{Logiciel31}}$ c | $\dfrac{kT}{6\pi\eta\left[\langle D\rangle_T\right]_{SEC}}$ d |
| 1290 | 0,968 | 0,924 | 0,913 | 0,998 | 0,945 | 1,000 |
| 5190 | 2,049 | 2,048 | 1,880 | 2,265 | 2,057 | 1,989 |
| 29000 | 5,159 | 4;761 | 5,076 | 5,810 | 4,776 | 5,278 |
| 145000 | 12,178 | 11,057 | 12,200 | 12,917 | 11,144 | 13,133 |
| 333000 | 20,286 | 17,359 | 17,297 | 21,190 | 21,917 | 20,915 |
| 1290 + 29000 | 2,303 | 1,291 | 1,319 | 2,917 | 2,874 | 3,449 |
| 1290+5190 | 1,148 | 1,178 | 1,046 | 1,578 | 1,354 | 1,470 |
| 5190+29000 | 3,198 | 2,655 | 2,473 | 3,768 | 3,544 | 3,638 |

a obtenu à partir de la distribution obtenue par SEC.

b obtenu par intégration du taylorgramme (à partir de la variance du taylorgramme).

c obtenu par intégration de la distribution en poids des coefficients de diffusion obtenue par le logiciel 31 (minimisation sur $D$).

d obtenu à partir de la distribution en poids des rayons hydrodynamiques provenant de la SEC.

**Détermination du temps au sommet**

Expérimentalement, le temps au sommet $t_0$ du signal de Taylor expérimental $\hat{S}_e(t)$ n'est pas connu avec précision à cause du bruit des mesures.

Or, le temps au sommet $\underline{t_0}$ a un impact aussi bien sur une analyse de type cumulant que sur la détermination de la distribution de tailles obtenue par régularisation contrainte.

En outre la méthode des cumulants repose sur un développement limité pour $(t-t_0)\rightarrow0$. D'un point de vue expérimental, il est nécessaire de choisir judicieusement la plage de temps $t$ pour l'analyse : si on se restreint à un intervalle très petit, le résultat sera fortement affecté par le bruit de mesure. Si au contraire on considère un intervalle trop étendu, la contribution des termes d'ordre supérieur en $(t-t_0)$, termes négligés dans la méthode des cumulants, va être significative.

Une étape pour déterminer un temps au sommet $t_0$, ainsi qu'en option une plage de temps appropriés pour une analyse de type cumulant, est présentée ci-dessous.

Dans une première sous-étape, on obtient une première estimation $t_{0,\text{guess}}$ du temps au sommet, par exemple en considérant le temps pour lequel $\hat{S}(t)$ est maximal ou en ajustant le pic de $\hat{S}(t)$ par une fonction parabolique ou une Gaussienne.

Dans une deuxième sous-étape, on établit une liste de $N$ temps au sommet à tester $t_{0,i}$ avec $i$ entier naturel variant entre 1 et $N$, les temps $t_{0,i}$ étant situés autour de $t_{0,\text{guess}}$ et espacés de façon régulière par un incrément de temps constant, avec :

$$t_{0,1} < t_{0,2} < \ldots t_{0,N} ;$$

$$t_{0,i+1} = t_{0,i} + \mathrm{d}t ;$$

et

$$t_{0,1} = t_{0,\text{guess}} - \Delta t , \ t_{0,N} = t_{0,\text{guess}} + \Delta t ;$$

où

$\mathrm{d}t$ est l'incrément de temps entre deux temps au sommet à teste successifs ; et

$\Delta t$ est un intervalle de temps typiquement de l'ordre de $t_{0,\text{guess}}/50$.

Dans une troisième sous-étape, pour chaque du temps au sommet à tester $t_{0,i}$, on fait une série d'analyses de type cumulant, en considérant plusieurs plages de temps d'étendues différentes.

La plage de temps est fixée par exemple par un niveau de coupure du signal $\hat{S}(t)$. Par exemple, pour un niveau de coupure de 0.1, on considère la plage de temps t telle que $\hat{S}(t) > 0.1 \times \hat{S}(t_{0,i})$. On note la valeur du premier et du deuxième cumulant issue de l'ajustement sur chaque plage de temps.

Dans une quatrième sous-étape, on détermine le temps au sommet $t_0$ optimal comme étant celui se situant entre les temps au sommets pour lesquels le premier cumulant $\Gamma_1$ diverge vers des valeurs positives lorsque le niveau de coupure augmente, et ceux pour lesquels le premier cumulant $\Gamma_1$ diverge vers des valeurs négatives lorsque le niveau de coupure augmente.

En traçant sur un graphique, pour chaque de temps de sommet à tester $t_{0,i}$, la courbe du premier cumulant $\Gamma_1$ en fonction du niveau de coupure, le temps au sommet $t_0$ optimal est celui pour lequel la courbe se situe entre les courbes à concavité vers le haut et les courbes à concavité vers le bas. Cette courbe présente une variation moindre par rapport aux autres.

Le choix du temps au sommet optimal est effectué par analyse visuelle du graphique précités ou de façon automatique, par exemple sur la base du signe de la dérivé seconde numérique du premier cumulant $\Gamma_1$ en fonction de la coupure.

En variante ou en option, il est possible de faire de même avec le deuxième cumulant $\Gamma_2$ et/ou le rapport du deuxième cumulant sur le premier cumulant au carré. Le fait de le faire à la fois pour le premier cumulant, le deuxième cumulant et le rapport du deuxième cumulant sur le premier cumulant au carré permet de fiabiliser le choix du temps au sommet.

Dans une cinquième étape on détermine la valeur optimale de coupure comme étant la plus élevée avant que les données ne montrent une déviation importante par rapport à leur tendance générale, due à l'influence du bruit de mesure pour des niveaux de coupure trop élevées.

**Revendications**

1. Procédé de détermination de la distribution en taille d'un mélange d'espèces moléculaires ou particulaires, comportant les étapes consistant à :

- injecter (100) un échantillon du mélange à analyser à l'intérieur d'un capillaire dans lequel s'écoule un éluant ;
- transporter (110) l'échantillon injecté le long du capillaire, depuis une section d'injection jusqu'à une section de détection de celui-ci, dans des conditions expérimentales propres à générer un phénomène de dispersion de Taylor qui soit mesurable au niveau de ladite section de détection ;
- générer (120), au moyen d'un capteur adapté équipant ladite section de détection, un signal caractéristique de la dispersion de Taylor de l'échantillon transporté ;
- traiter (130) ledit signal de détection pour obtenir le signal de Taylor expérimental $\hat{S}(t)$ ; et,
- analyser (200) ledit signal de Taylor expérimental $\hat{S}(t)$,

**caractérisé en ce que** ladite étape d'analyse d'un signal de Taylor expérimental $\hat{S}(t)$ d'un échantillon dudit mélange, consiste à rechercher une distribution d'amplitudes $P(G_{(c)})$ permettant de décomposer ledit signal de Taylor expérimental $\hat{S}(t)$ en une somme de fonction gaussiennes selon l'équation :

$$\hat{S}(t) \equiv \int_0^\infty P(G_{(c)}) G_{(c)}^{c/2} \exp\left[-(t-t_0)^2 G_{(c)}^c\right] dG_{(c)}$$

où

- $t$ est une variable dont dépend le signal de Taylor expérimental et $t_0$ une valeur de la variable $t$ commune aux différentes fonctions gaussiennes et correspondant au sommet du signal de Taylor expérimental $\hat{S}(t)$ ;
- $G_{(c)}$ est un paramètre caractéristique d'une fonction gaussienne d'amplitude $P(G_{(c)})$ et est associé :
  - pour $c = 1$, au coefficient de diffusion D d'une espèce selon la relation $G_{(1)} = 12D / \left(R_c^2 t_0\right)$
  - pour $c = -1$, au rayon hydrodynamique $R_h$ d'une espèce selon la relation

$$G_{(-1)} = \frac{2k_B T}{\pi \eta R_c^2 t_0} R_h^{-1} ;$$

et
- pour $c = -1/d_f = -(1+a)/3$, à la masse molaire $M$ d'une espèce selon la relation

$$G = \frac{2k_B T}{\pi \eta R_c^2 t_0} \left(\frac{10\pi N_a}{3K}\right)^{1/3} M^{-\left(\frac{1+a}{3}\right)},$$

où $d_f$=3/(1+a) est la dimension fractale de l'objet et $k_B$ est la constante de Boltzmann, $T$ est la température absolue exprimée en degré Kelvin à laquelle s'effectue l'expérience, $\eta$ est la viscosité de l'éluant utilisé, $R_c$ est le rayon interne du capillaire utilisé, $N_a$ est le nombre d'Avogadro et $K$ et $a$ sont les coefficients de Mark Houwink,

en mettant en oeuvre un algorithme de régularisation contrainte consistant à minimiser une fonction de coût $H_\alpha$ comportant au moins un terme de contrainte associé à une contrainte que doit respecter la distribution d'amplitudes $P(G_{(c)})$ solution de l'équation précédente, la minimisation s'effectuant sur un intervalle d'intérêt des valeurs du paramètre $G_{(c)}$.

2. Procédé selon la revendication 1, **caractérisé en ce que** l'équation précédente est discrétisée en subdivisant ledit intervalle de valeurs du paramètre $G_{(c)}$, chaque point de discrétisation $G_m$ étant indexé par un entier $m$ variant entre la valeur unité et la valeur *N*, le point $G_m$ étant distant du point $G_{m-1}$ d'un sous-intervalle de longueur $c_m$.

3. Procédé selon la revendication 2, **caractérisé en ce que** la fonction de coût prend la forme :

$$H_\alpha = \chi^2 + \alpha^2 \Delta^2$$

où :

- le premier terme $\chi^2$ est un terme de distance entre le signal de Taylor expérimental $\hat{S}(t)$ et un signal de Taylor reconstruit définit par :

$$S'(t) = \sum_{m=1}^{N} c_m P(G_m) \sqrt{G_m} \exp[-(t-t_0)^2 G_m],$$

et

- le second terme $\Delta^2$ est un terme de contrainte associé à ladite au moins une contrainte que doit respecter la distribution d'amplitudes $P(G)$ solution de l'équation précédente, ledit second terme étant introduit par un coefficient de Lagrange $\alpha$, permettant d'adapter la contribution du second terme de la fonction de coût $H_\alpha$ par rapport au premier terme.

4. Procédé selon la revendication 3, **caractérisé en ce que** ledit premier terme $\chi^2$ est une distance du type « moindres carrés » prenant la forme :

$$\chi^2 = \sum_{k=1}^{L} \left( S'(t_k) - \hat{S}(t_k) \right)^2$$

où le signal de Taylor expérimental $\hat{S}(t)$ et la fonction reconstruite $S'(t)$ sont échantillonnés temporellement, chaque échantilion étant indexé par un entier *k* variant entre la valeur unité et la valeur *L*.

5. Procédé selon la revendication 3 ou la revendication 4, **caractérisé en ce que** ladite au moins une contrainte que doit respecter la distribution d'amplitudes $P(G)$ solution de l'équation précédente, est une contrainte de régularité associée à un terme de contrainte $\Delta^2$ prenant de préférence la forme :

$$\Delta^2 = \sum_{m=2}^{N-1} \left[ P(G_{m-1}) - 2P(G_m) + P(G_{m+1}) \right]^2$$

6. Procédé selon l'une quelconque des revendications 3 à 5, **caractérisé en ce que** l'étape d'analyse comporte une étape de détermination de la valeur optimale $\alpha_0$ du coefficient de Lagrange $\alpha$ de manière à ce que la valeur du terme de distance $\chi^2$ correspondant au minimum de ladite fonction de coût $H_{\alpha=\alpha_0}$ soit proche par valeurs inférieures d'une erreur statistique $_\nu$, de préférence de la forme $v = L - N$.

7. Procédé selon l'une quelconque des revendications 3 à 5, **caractérisé en ce que**, ledit intervalle d'intérêt des valeurs du paramètre $G_{(c)}$ étant délimité par une borne inférieure $G_{min}$ et une borne supérieure $G_{max}$, le procédé comporte une étape de détermination des valeurs des bornes inférieure et supérieure.

8. Procédé selon la revendication 7, **caractérisé en ce qu'**elle comporte une étape de décomposition en cumulants d'un signal de Taylor normalisé $s(t)$ associé au signal de Taylor expérimental $\hat{S}(t)$ par le relation: $s(t)=S(t)/S(t_0)$, consistant à ajuster à la courbe $\ln[s(t)]$ un polynôme du second ordre de la variable $(t - t_0)^2$ de manière à déterminer les cumulants de premier ordre $\Gamma_1$ et de second ordre $\Gamma_2$, et **en ce que** ladite étape de détermination des valeurs des bornes inférieure $G_{min}$ et supérieure $G_{max}$ utilise les équations :

$$\beta = \ln \Gamma_1 - \ln\left(1 + \frac{\Gamma_2}{\Gamma_1^2}\right) \text{ et } \gamma = \sqrt{\ln\left(1 + \frac{\Gamma_2}{\Gamma_1^2}\right)}$$

où $\beta$ et $\gamma$ sont respectivement la moyenne et l'écart-type du logarithme du paramètre $G$ d'une distribution log-normale, puis,

$$G_{min} = \exp\left(\beta - k\sqrt{2}\gamma\right) \text{ et } G_{max} = \exp\left(\beta + k\sqrt{2}\gamma\right).$$

**9.** Procédé selon la revendication 7, **caractérisé en ce que** ladite étape de détermination des valeurs des bornes inférieure et supérieure de l'intervalle d'intérêt est empirique et consiste à :

- déterminer un signal de Taylor normalisé $s(t)$ associé au signal de Taylor expérimental $\hat{S}(t)$ par la relation : $s(t)=S(t)/S(t_0)$,
- calculer le logarithme $\ln[s(t)]$,
- déterminer la dérivée $\dfrac{\partial \ln s}{\partial x}$ par rapport à la variable $x = (t - t_0)^2$, et
- déterminer les valeurs des paramètres $\tau_{min}$ et $\tau_{max}$ reliés aux extrema de ladite dérivée selon les relations :

$$\tau_{min} = a_{min}\left(\left|\frac{\partial \ln s}{\partial x}\right|_{max}\right)^{-1/2}$$

$$\tau_{max} = a_{max}\left(\left|\frac{\partial \ln s}{\partial x}\right|_{min}\right)^{-1/2}$$

avec $\alpha_{min} = 0,1$ ; $\alpha_{max} = 3$
- déterminer les bornes inférieure $G_{min}$ et supérieure $G_{max}$ en utilisant les équations :
- pour c=1 : $G_{min} = \tau_{max}^{-2}$ , $G_{max} = \tau_{min}^{-2}$ ,
- pour c=-1 : $G_{min} = \tau_{min}^{2}$ , $G_{max} = \tau_{max}^{2}$ ,
- pour c=-1/d$_f$ = -(1+a)/3 : $G_{min} = \tau_{min}^{\left(\frac{6}{1+a}\right)}$ , $G_{max} = \tau_{max}^{\left(\frac{6}{1+a}\right)}$ .

**10.** Procédé selon l'une quelconque des revendications précédentes, **caractérisé en ce qu'**il comporte une étape de mesure d'une moyenne en $T$, $\langle G\rangle_T$, du paramètre $G_{(1)}$ à partir du signal de Taylor expérimental et/ou d'une moyenne en $\Gamma$, $\langle G\rangle_\Gamma$, du paramètre $G_{(1)}$ à partir de la décomposition en cumulants, chaque moyenne pouvant être utilisée dans une contrainte que doit respecter la distribution d'amplitudes $P(G_{(1)})$ solution de l'équation précédente.

**11.** Procédé selon la revendication 7 et la revendication 10 en combinaison, **caractérisé en ce que** ladite étape de détermination des valeurs des bornes inférieure $G_{min}$ et supérieur $G_{max}$ utilise les équations :

$$\beta = \frac{1}{3}\ln\langle G\rangle_\Gamma + \frac{2}{3}\ln\langle G\rangle_T$$

$$\gamma = \sqrt{\frac{2}{3}\ln\frac{\langle G\rangle_\Gamma}{\langle G\rangle_T}}$$

puis

$$G_{min} = \exp\left(\beta - k\sqrt{2}\gamma\right) \text{ et } G_{max} = \exp\left(\beta + k\sqrt{2}\gamma\right).$$

**12.** Procédé selon l'une quelconque des revendications précédents, comprenant une étape de détermination d'un temps au sommet du signal de Taylor expérimental $\hat{S}(t)$, l'étape de détermination du temps au sommet comprenant les sous-étapes consistant à :

- obtenir une première estimation $t_{0,guess}$ du temps au sommet,
- faire, pour plusieurs temps au sommet à tester $t_{0,i}$ différents choisis autour du temps au sommet estimé $t_{0,guess}$, une série d'analyses de type cumulant, en considérant plusieurs plages de temps d'étendues différentes fixées par un niveau de coupure ;
- choisir un temps au sommet $t_0$ optimal comme étant celui se situant entre les temps au sommet pour lesquels le premier cumulant $\Gamma_1$, le deuxième cumulant $\Gamma_2$ et/ou le rapport du deuxième cumulant sur le premier cumulant au carré, diverge vers des valeurs positives lorsque le niveau de coupure augmente, et ceux pour lesquels, respectivement, le premier cumulant $\Gamma_1$, le deuxième cumulant $\Gamma_2$ et/ou le rapport du deuxième cumulant sur le premier cumulant au carré, diverge vers des valeurs négatives lorsque le niveau de coupure augmente.

**13.** Support d'enregistrement d'informations, **caractérisé en ce qu'**il comporte des instructions pour l'exécution d'un procédé de détermination de la distribution en rayon hydrodynamique ou en coefficient de diffusion ou en masse molaire d'un mélange d'espèces moléculaires ou particulaires conforme à l'une quelconque des revendications 1 à 12, lorsque les instructions sont exécutées par un calculateur électronique.

**14.** Système de détermination de la distribution en rayon hydrodynamique ou en coefficient de diffusion ou en masse molaire d'un mélange d'espèces moléculaires ou particulaires, comportant un calculateur électronique, **caractérisé en ce que** ledit calculateur électronique est programmé pour exécuter un procédé de détermination de la distribution en rayon hydrodynamique ou en coefficient de diffusion ou en masse molaire d'un mélange d'espèces moléculaires ou particulaires conforme à l'une quelconque des revendications 1 à 12.

**Patentansprüche**

**1.** Verfahren zum Ermitteln der Größenverteilung einer Mischung von molekularen oder teilchenförmigen Spezies, aufweisend die Schritte bestehend aus:

- Injizieren (100) einer Stichprobe der zu analysierenden Mischung ins Innere einer Kapillare, in der ein Eluent fließt;
- Transportieren (110) der indizierten Stichprobe entlang der Kapillare ausgehend von einem Injektionsabschnitt bis zu einem Detektionsabschnitt davon unter Versuchsbedingungen, die dazu geeignet sind, ein Taylor-Dispersion-Phänomen zu erzeugen, das auf Höhe des Detektionsabschnitts messbar ist;
- Erzeugen (120) mittels eines angepassten Sensors, mit dem der Detektionsabschnitt ausgestattet ist, eines charakteristischen Signals für die Taylor-Dispersion der transportierten Stichprobe;
- Verarbeiten (130) des Detektionssignals zum Beschaffen des Taylorversuchssignals $\hat{S}(t)$; und
- Analysieren (200) des Taylorversuchssignals $\hat{S}(t)$,

dadurch charakterisiert, dass der Schritt der Analyse eines Taylorversuchssignals $\hat{S}(t)$ einer Stichprobe der Mischung aus dem Ermitteln einer Amplitudenverteilung $P(G_{(c)})$ besteht, die es ermöglicht, das Taylorversuchssignal $\hat{S}(t)$ in eine Summe von Gauß-Funktionen zu zerlegen gemäß der Gleichung:

$$\hat{S}(t) \equiv \int_0^{\infty} P(G_{(c)}) G_{(c)}^{c/2} \exp\left[-(t-t_0)^2 G_{(c)}^c\right] dG_{(c)}$$

wobei

- $t$ eine Variable ist, von der das Taylorversuchssignal abhängt und $t_0$ ein gemeinsamer Wert der Variablen $t$ für die unterschiedlichen Gauß-Funktionen ist und dem Scheitelpunkt des Taylorversuchssignals $\hat{S}(t)$ entspricht;
- $G_{(c)}$ ein charakteristischer Parameter einer Gauß-Funktion mit der Amplitude $P(G_{(c)})$ ist und assoziiert ist:

- für $c=1$ mit dem Diffusionskoeffizienten $D$ einer Spezies gemäß der Beziehung

$$G_{(1)} = 12D \big/ \left( R_c^2 t_0 \right)$$

- für $c$=-1 mit dem hydrodynamischen Radius $R_h$ einer Spezies gemäß der Beziehung

$$G_{(-1)} = \frac{2k_B T}{\pi \eta R_c^2 t_0} R_h^{-1} \; ;$$

und
- für $c$=-1/$d_i$=-(1+$a$)/3 mit der modularen Masse $M$ einer Spezies gemäß der Beziehung

$$G = \frac{2k_B T}{\pi \eta R_c^2 t_0} \left( \frac{10 \pi N_a}{3K} \right)^{1/3} M^{-\left( \frac{1+a}{3} \right)} \; ,$$

wobei $d_f$=3/(1+$a$) die fraktale Dimension des Objekts ist und $k_B$ die Boltzmann-Konstante ist, $T$ die absolute Temperatur, ausgedrückt in Kelvin, ist bei der das Experiment durchgeführt wird, $\eta$ die Viskosität des verwendeten Eluents ist, $R_c$ der interne Radius der verwendeten Kapillare ist, $N_a$ die Avogadrozahl ist und $K$ und $a$ die Mark-Houwink-Koeffizienten sind,
durch Durchführen eines Algorithmus zur beschränkten Regulierung, bestehend aus Minimieren einer Kostenfunktion $H_\alpha$ die mindestens einen Bedingungsterm aufweist, der zu einer Bedingung gehört, die die Amplitudenverteilung $P(G_{(c)})$, die die vorhergehende Gleichung löst, einhalten muss, wobei die Minimierung über ein Zielintervall von Werten des Parameters $G_{(c)}$ durchgeführt wird.

2. Verfahren gemäß Anspruch 1, dadurch charakterisiert, dass die vorhergehende Gleichung diskretisiert wird, indem das Intervall von Werten des Parameters $G_{(c)}$ unterteilt wird, wobei jeder Diskretisierungspunkt $G_m$ durch eine ganze Zahl $m$ indiziert wird, die sich zwischen dem Einheitswert und dem Wert $N$ ändert, wobei der Punkt $G_m$ von dem $G_{m-1}$ eines Unterintervalls der Länge $c_m$ entfernt ist.

3. Verfahren gemäß Anspruch 2, dadurch charakterisiert, dass die Kostenfunktion die Form hat:

$$H_\alpha = \chi^2 + \alpha^2 \Delta^2$$

wobei:

- der erste Term $\chi^2$ ein Term für die Entfernung zwischen dem Taylorversuchssignals $\hat{S}(t)$ und einem rekonstruierten Taylorsignal ist, definiert durch:

$$S'(t) = \sum_{m=1}^{N} c_m P(G_m) \sqrt{G_m} \exp[-(t - t_0)^2 G_m] \, ,$$

und
- der zweite Term $\Delta^2$ ein Bedingungsterm ist, der zu der mindestens einen Bedingung gehört, die die Amplitudenverteilung $P(G)$, die die vorhergehende Gleichung löst, einhalten muss, wobei der zweite Term durch einen Lagrange-Koeffizienten $\alpha$ eingeführt wird, der es ermöglicht, den zweiten Term der Kostenfunktion $H_\alpha$ bezüglich des ersten Terms anzupassen.

4. Verfahren gemäß Anspruch 3, dadurch charakterisiert, dass der erste Term $\chi^2$ eine Entfernung des Typs "kleinste Quadrate" ist, der die Form annimmt:

$$\chi^2 = \sum\nolimits_{k=1}^{L} \left( S'(t_k) - \hat{S}(t_k) \right)^2$$

wobei das Taylorversuchssignal $\hat{S}(t)$ und die rekonstruierte Funktion $S'(t)$ zeitlich abgetastet werden, wobei jeder Abtastwert durch eine ganze Zahl $k$ indiziert wird, die sich zwischen dem Einheitswert und dem Wert $L$ ändert.

5. Verfahren gemäß Anspruch 3 oder Anspruch 4, dadurch charakterisiert, dass mindestens eine Bedingung, die die Amplitudenverteilung $P(G)$, die die vorhergehende Gleichung löst, einhalten muss, eine Regularitätsbedingung ist, die zu einem Bedingungsterm $\Delta^2$ gehört, der bevorzugt die Form annimmt:

$$\Delta^2 = \sum\nolimits_{m=2}^{N-1} \left[ P(G_{m-1}) - 2P(G_m) + P(G_{m+1}) \right]^2 .$$

6. Verfahren gemäß einem der Ansprüche 3 bis 5, dadurch charakterisiert, dass der Schritt der Analyse einen Schritt der Ermittlung des optimalen Werts $\alpha_0$ des Lagrange-Koeffizienten $\alpha$ der Art aufweist, dass der Wert des Entfernungsterms $\chi^2$, der dem Minimum der Kostenfunktion $H_{\alpha=\alpha 0}$ entspricht, nahe ist an Werten, die geringer sind als ein statistischer Fehler $\nu$, bevorzugt von der Form $\nu=L\text{-}N$.

7. Verfahren gemäß einem der Ansprüche 3-5, dadurch charakterisiert, dass das Zielintervall des Parameters $G_{(c)}$ beschränkt ist durch eine untere Schranke $G_{min}$ und eine obere Schranke $G_{max}$, wobei das Verfahren einen Schritt des Bestimmens der Werte der unteren Schranke und der oberen Schranke aufweist.

8. Verfahren gemäß Anspruch 7, dadurch charakterisiert, dass es einen Schritt der Zerlegung eines normalisierten Taylorsignals $s(t)$, das gemäß der Beziehung $s(t)=S(t)/S(t_0)$ zu dem Taylorversuchssignal $\hat{S}(t)$ gehört, in Kumulanten aufweist, bestehend aus Anpassen eines Polynom zweiter Ordnung der Variable $(t\text{-}t_0)^2$ an die Kurve $\ln[s(t)]$ zum Bestimmen der Kumlanten erster Ordnung $\Gamma_1$ und zweiter Ordnung $\Gamma_2$ und dadurch, dass der Schritt des Bestimmens der Werte der unteren Schranke $G_{min}$ und der oberen Schranke $G_{max}$ die Gleichungen verwendet:

$$\beta = \ln \Gamma_1 - \ln\left( 1 + \frac{\Gamma_2}{\Gamma_1^2} \right) \text{ et } \gamma = \sqrt{\ln\left( 1 + \frac{\Gamma_2}{\Gamma_1^2} \right)}$$

wobei $\beta$ und $\gamma$ das Mittel bzw. die Standardabweichung des Logarithmus des Parameters $G$ einer Log-Normalverteilung sind, gefolgt von

$$G_{min} = \exp\left( \beta - k\sqrt{2}\gamma \right) \text{ et } G_{max} = \exp\left( \beta + k\sqrt{2}\gamma \right).$$

9. Verfahren gemäß Anspruch 7, dadurch charakterisiert, dass der Schritt der Bestimmung der Werte der unteren Schranke und der oberen Schranke des Zielintervalls empirisch ist und besteht aus:

- Ermitteln eines normalisierten Taylorsignals $s(t)$, das gemäß der Beziehung $s(t)=S(t)/S(t_0)$ zu dem Taylorversuchssignal $\hat{S}(t)$ gehört,
- Berechnen des Logarithmus $\ln[s(t)]$,
- Ermitteln der Ableitung $\dfrac{\partial \ln s}{\partial x}$ bezüglich der Variablen $x=(t\text{-}t_0)^2$, und
- Ermitteln der Werte der Parameter $\tau_{min}$ und $\tau_{max}$, die mit den Extrema der Ableitung verbunden sind gemäß den Beziehungen:

$$\tau_{\min} = a_{\min}\left(\left|\frac{\partial \ln s}{\partial x}\right|_{\max}\right)^{-1/2}$$

$$\tau_{\max} = a_{\max}\left(\left|\frac{\partial \cdot \ln s}{\partial x}\right|_{\min}\right)^{-1/2}$$

mit $a_{\min}=0,1$ ; $a_{\max}=3$,
- Ermitteln der unteren Schranke Schranke $G_{\min}$ und der oberen Schranke $G_{\max}$ unter Verwendung der Gleichungen

- für **c=1** : $\quad G_{\min} = \tau_{\max}^{-2}$ , $\quad G_{\max} = \tau_{\min}^{-2}$ ,

- für **c=-1** : $\quad G_{\min} = \tau_{\min}^{2}$ , $\quad G_{\max} = \tau_{\max}^{2}$ ,

- für **c= -1/$d_f$ = -(1+a)/3** : $\quad G_{\min} = \tau_{\min}^{\left(\frac{6}{1+a}\right)}$ , $\quad G_{\max} = \tau_{\max}^{\left(\frac{6}{1+a}\right)}$ .

**10.** Verfahren gemäß einem der vorhergehenden Ansprüche, dadurch charakterisiert, dass es einen Schritt des Messens eines Mittels über $T$, $<G>_T$ des Parameters $G_{(1)}$ ausgehend von dem Taylor-Versuchssignal und/oder eines Mittels über $\Gamma$, $<G>_{\Gamma}$, des Parameters $G_{(1)}$ ausgehend von der Zerlegung in Kumulanten aufweist, wobei jedes Mittel in einer Bedingung verwendet werden kann, die von der Amplitudenverteilung $P(G_{(1)})$, die die vorhergehende Gleichung löst, eingehalten werden muss.

**11.** Verfahren gemäß Anspruch 7 und Asnspruch 10 in Kombination, dadurch charakterisiert, dass der Schritt der Bestimmung der Werte der unteren Schranke $G_{\min}$ und der oberen Schranke $G_{\max}$ die Gleichungen verwendet:

$$\beta = \frac{1}{3}\ln\langle G\rangle_{\Gamma} + \frac{2}{3}\ln\langle G\rangle_{T}$$

$$\gamma = \sqrt{\frac{2}{3}\ln\frac{\langle G\rangle_{\Gamma}}{\langle G\rangle_{T}}}$$

gefolgt von

$$G_{\min} = \exp\left(\beta - k\sqrt{2}\gamma\right) \text{ et } G_{\max} = \exp\left(\beta + k\sqrt{2}\gamma\right).$$

**12.** Verfahren gemäß einem der vorhergehenden Ansprüche, aufweisend einen Schritt der Bestimmung einer Zeit am Scheitel des Taylorversuchssignals $\hat{S}(t)$, wobei der Schritt der Bestimmung der Zeit am Scheitel die Unterschritte aufweist bestehend aus:

- Beschaffen einer ersten Schätzung $t_{0,guess}$ der Zeit am Scheitel,
- Durchführen, für mehrere unterschiedliche, zu testende, um die geschätzte Zeit am Scheitel $t_{0,guess}$ ausgewählte Zeiten am Scheitel $t_{0,i}$ einer Folge von Kumulantenanalysen unter Berücksichtigung von mehreren Zeitbereichen mit unterschiedlichen Längen, festgelegt durch ein Abschnittsniveau;
- Wählen einer optimalen Zeit am Scheitel $t_0$ als die, die sich zwischen den Scheitelzeiten, für die die erste Kumulante $\Gamma_1$, die zweite Kumulante $\Gamma_2$ und/oder das Verhältnis zwischen der zweiten Kumulante und der ersten Kumulante im Quadrat in Richtung positiver Werte divergiert, wenn sich das Abschnittsniveau erhöht und denen befindet, für die, beziehungsweise, die erste Kumulante $\Gamma_1$, die zweite Kumulante $\Gamma_2$ und/oder das Verhältnis zwischen der zweiten Kumulante und der ersten Kumulante im Quadrat in Richtung negativer Werte divergiert, wenn sich das Abschnittsniveau erhöht.

13. Informationsspeichermedium, dadurch charakterisiert, dass es Instruktionen für die Ausführung eines Verfahrens zur Ermittlung der Verteilung des hydrodynamischen Radius oder des Diffusionskoeffizienten oder der modularen Masse einer Mischung von molekularen oder teilchenförmigen Spezies gemäß einem der Ansprüche 1 bis 12, wenn die Instruktionen von einem elektronischen Rechner ausgeführt werden, aufweist.

14. System zur Ermittlung der Verteilung des hydrodynamischen Radius oder des Diffusionskoeffizienten oder der modularen Masse einer Mischung von molekularen oder teilchenförmigen Spezies aufweisend einen elektronischen Rechner, dadurch charakterisiert, dass der elektronische Rechner dazu programmiert ist, ein Verfahren zur Ermittlung der Verteilung des hydrodynamischen Radius oder des Diffusionskoeffizienten oder der modularen Masse einer Mischung von molekularen oder teilchenförmigen Spezies gemäß einem der Ansprüche 1 bis 12 auszuführen.

**Claims**

1. Method for determining the size distribution of a mixture of molecule or particle species including the following steps:

- injecting (100) a sample of the mixture to be analysed inside a capillary in which an eluent is flowing;
- transporting (110) the sample injected along the capillary from an injection section to a detection section thereof, in experimental conditions suitable to generate a Taylor dispersion phenomenon that is measurable at the level of the detection section;
- generating (120), by means of a suitable sensor included in the detection section, a signal characteristic of the Taylor dispersion of the transported sample;
- processing (130) the detection signal in order to obtain an experimental Taylor signal $\hat{S}(t)$ ; and
- analysing (200) the experimental Taylor signal $\hat{S}(t)$,

**characterised in that** the step of analysing an experimental Taylor signal $\hat{S}(t)$ of a sample of the mixture consists of searching an amplitude distribution $P(G_{(c)})$ that allows the experimental Taylor signal $\hat{S}(t)$ to be broken down into a sum of Gaussian functions by means of the equation:

$$\hat{S}(t) \equiv \int_0^\infty P(G_{(c)}) G_{(c)}^{c/2} \exp\left[-(t-t_0)^2 G_{(c)}^c\right] dG_{(c)}$$

where

- $t$ is a variable upon which the experimental Taylor signal depends and $t_0$ is a value of the variable $t$ common to the various Gaussian functions and corresponding to the peak of the experimental Taylor signal $\hat{S}(t)$ ;
- $G_{(c)}$ is a characteristic parameter of a Gaussian amplitude function $P(G_{(c)})$ and is associated:

  - where $c = 1$, with the diffusion coefficient $D$ of a species according to the relation $G_{(1)} = 12D\big/\left(R_c^2 t_0\right)$

  - for $c = -1$, to the hydrodynamic radius $R_h$ of a species according to the relation $G_{(-1)} = \dfrac{2k_B T}{\pi \eta R_c^2 t_0} R_h^{-1}$ ; and

  - for $c = -1/d_f = -(1+a)/3$, to the molar mass $M$ of a species according to the relation

$$G = \frac{2k_B T}{\pi \eta R_c^2 t_0} \left(\frac{10\pi N_a}{3K}\right)^{1/3} M^{-\left(\frac{1+a}{3}\right)}$$

,

Where $d_f = 3/(1+a)$ is the fractal dimension of the object and $k_B$ is the Boltzmann constant, $T$ is the absolute temperature expressed in Kelvin at which the experiment is conducted, $\eta$ is the viscosity of the eluent used, $R_c$ is the internal radius of the capillary used, $N_a$ is Avogadro's number, and $K$ and $a$ are Mark Houwink coefficients,

by implementing a constrained regularisation algorithm consisting of minimising a cost function $H_\alpha$ including at least one constraint term associated with a constraint that must observe the amplitude distribution $P(G_{(c)})$ that is the solution of the foregoing equation,

whereby the minimisation is carried out on an interval of interest of the values of the parameter $G_{(c)}$.

2. Method according to claim 1, **characterised in that** the foregoing equation is discretised by subdividing the interval of values of the parameter $G_{(c)}$, whereby each discretisation point $G_m$ is indexed by an integer $m$ that varies between the unit value and the value $N$, whereby the point $G_m$ is at a distance from the point $G_{m-1}$ corresponding to a sub-interval of the length $c_m$.

3. Method according to claim 2, **characterised in that** the cost function takes the following form:

$$H_\alpha = \chi^2 + \alpha^2 \Delta^2$$

Where:

- the first term $\chi^2$ is a distance term between the experimental Taylor signal $\hat{S}(t)$ and a reconstructed Taylor signal defined by:

$$S'(t) = \sum_{m=1}^{N} c_m P(G_m) \sqrt{G_m} \exp[-(t-t_0)^2 G_m],$$

and
- the second term $\Delta^2$ is a constraint term associated with the at least one constraint that must observe the amplitude distribution $P(G)$ that is the solution of the foregoing equation, whereby the second term is introduced by a Lagrange coefficient $\alpha$, allowing the contribution of the second term of the cost function $H_\alpha$ to be adapted to the first term.

4. Method according to claim 3, **characterised in that** the first term $\chi^2$ is a distance of the type 'least squares' taking the form:

$$\chi^2 = \sum_{k=1}^{L} \left( S'(t_k) - \hat{S}(t_k) \right)^2$$

where the experimental Taylor signal $\hat{S}(t)$ and the reconstructed function $\hat{S}(t)$ are sampled over time, whereby each sample is indexed by an integer $k$ varying between the unit value and the value $L$.

5. Method according to claim 3 or claim 4, **characterised in that** the at least one constraint that must be observed by the amplitude distribution $P(G)$ that is the solution of the foregoing equation is a regularity constraint associated with a constraint term $\Delta^2$ preferably taking the form:

$$\Delta^2 = \sum_{m=2}^{N-1} \left[ P(G_{m-1}) - 2P(G_m) + P(G_{m+1}) \right]^2$$

6. Method according to anyone of claims 3 to 5, **characterised in that** the analysis step includes a step of determining the optimal value $\alpha_0$ of the Lagrange coefficient $\alpha$ such that the value of the distance term $\chi^2$ corresponding to the minimum of the cost function $H_{\alpha=\alpha0}$ is close by values lower than a statistical error $_\nu$, preferably of the form $\nu = L-N$.

7. Method according to anyone of claims 3 to 5, **characterised in that**, because the interval of interest of the values of the parameter $G_{(c)}$ are delimited by a minimum $G_{min}$ and a maximum $G_{max,}$, the method includes a step of determining the values of the minimum and maximum.

8. Method according to claim 7, **characterised in that** it includes a step of breaking down a normalised Taylor signal $s(t)$ associated with the experimental Taylor signal $\hat{S}(t)$ into components by the relation: $s(t)=S(t)/S(t_0)$, consisting

of adjusting to the curve ln[$s(t)$] a second-order polynomial of the variable $(t- t_0)^2$ so as to determine the first-order components $\Gamma_1$ and second-order components $\Gamma_2$, and **in that** the step of determining the values of the minimum $G_{min}$ and maximum $G_{max}$ uses the equations:

$$\beta = \ln \Gamma_1 - \ln\left(1 + \frac{\Gamma_2}{\Gamma_1^2}\right) \text{ and } \gamma = \sqrt{\ln\left(1 + \frac{\Gamma_2}{\Gamma_1^2}\right)}$$

where $\beta$ and $\gamma$ are respectively the average and the standard deviation of the logarithm of the parameter $G$ of a log-normal distribution, followed by,

$$G_{min} = \exp\left(\beta - k\sqrt{2}\gamma\right) \text{ and } G_{max} = \exp\left(\beta + k\sqrt{2}\gamma\right).$$

9. Method according to claim 7, **characterised in that** the step of determining the values of the minimum and maximum of the interval of interest is empirical and consists of:

- determining a normalised Taylor signal $s(t)$ associated with the experimental Taylor signal $\hat{S}(t)$ by the relation: $s(t) = S(t)/S(t_0)$,
- calculating the logarithm ln[$s(t)$],
- determining the derivative $\dfrac{\partial \ln s}{\partial x}$ relative to the variable $x = (t-t_0)^2$, and
- determining the values of the parameters $\tau_{min}$ and $\tau_{max}$ related to the extrema of the derivative according to the relations:

$$\tau_{min} = a_{min}\left(\left|\frac{\partial \ln s}{\partial x}\right|_{max}\right)^{-1/2}$$

$$\tau_{max} = a_{max}\left(\left|\frac{\partial \ln s}{\partial x}\right|_{min}\right)^{-1/2}$$

with $a_{min} = 0,1$ ; $a_{max} = 3$,
- determining the minimum $G_{min}$ and maximum $G_{max}$ using the equations:

- for c=1 : $G_{min} = \tau_{max}^{-2}$ , $G_{max} = \tau_{min}^{-2}$ ,
- for c=-1 : $G_{min} = \tau_{min}^{2}$ , $G_{max} = \tau_{max}^{2}$ ,
- for c= 1/$d_f$ =-(1+a)/3 : $G_{min} = \tau_{min}^{\left(\frac{6}{1+a}\right)}$ , , $G_{max} = \tau_{max}^{\left(\frac{6}{1+a}\right)}$ .

10. Method according to any of the foregoing claims, **characterised in that** it includes a step of measuring an average in $T$, $\langle G \rangle_T$, of the parameter $G_{(1)}$ based on the experimental Taylor signal and/or an average in $\Gamma$, $\langle G \rangle_\Gamma$, of the parameter $G_{(1)}$ based on the breakdown, whereby each average may be used in a constraint that must be observed by the amplitude distribution $P(G_{(1)})$ that is the solution of the foregoing equation.

11. Method according to claim 7 in conjunction with claim 10, **characterised in that** the step of determining the values of the minimum $G_{min}$ and maximum $G_{max}$ uses the following equations:

$$\beta = \frac{1}{3}\ln\langle G\rangle_\Gamma + \frac{2}{3}\ln\langle G\rangle_T$$

$$\gamma = \sqrt{\frac{2}{3} \ln \frac{\langle G \rangle_{\Gamma}}{\langle G \rangle_{T}}}$$

then

$$G_{\min} = \exp\left(\beta - k\sqrt{2}\gamma\right) \text{ and } G_{\max} = \exp\left(\beta + k\sqrt{2}\gamma\right).$$

**12.** Method according to any of the foregoing claims, comprising a step of determining a peak time of the experimental Taylor signal $\hat{S}(t)$, comprising the following sub-steps:

- obtaining a first estimate $t_{0,guess}$ of the peak time,
- carrying out, for several different peak times to be tested $t_{0,i}$ selected around the estimated peak time $t_{0,guess}$, a series of cumulant analyses considering several ranges of time of different lengths specified based on a cutoff level;
- selecting an optimal peak time t0 for which the first cumulant $\Gamma$1, the second cumulant $\Gamma$2, and/or the square of the ratio of the second cumulant to the first cumulant diverges towards positive values when the cutoff level increases, for which, respectively, the first cumulant $\Gamma$1, the second cumulant, $\Gamma$2 and/or the square of the ratio of the second cumulant to the first cumulant diverges towards negative values when the cutoff level increases.

**13.** Data storage medium, **characterised in that** it includes instructions for the execution of a method for determining the hydrodynamic radius, diffusion coefficient, or molar mass distribution of a mixture of molecule or particle species according to anyone of claims 1 to 12, when the instructions are executed by a computer.

**14.** System for determining the hydrodynamic radius, diffusion coefficient, or molar mass distribution of a mixture of molecule or particle species including a computer, whereby the computer is programmed to execute a method for determining the hydrodynamic radius, diffusion coefficient, or molar mass distribution of a mixture of molecule or particle species according to anyone of the claims 1 to 12.

**FIG.1**

| 100 |
|:---:|

↓

| 11.0 |
|:---:|

↓

| 120 |
|:---:|

↓

| 130 |
|:---:|

↓

| 140 |
|:---:|

| 142 |
|:---:|

↓

| 144 |
|:---:|

↓

| 146 |
|:---:|

↓

| 148 |
|:---:|

↓

| 150 |
|:---:|

~ 200

↓

| 152 |
|:---:|

↓

| 154 |
|:---:|

↓

| 156 |
|:---:|

↓

| 158 |
|:---:|

↓

| 160 |
|:---:|

# FIG.2

## FIG.3

## FIG.4

**FIG.5**

EP 2 864 756 B1

**EP 2 864 756 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010009907 A1

- US 201164380 B

**Littérature non-brevet citée dans la description**

- Advances in the theory of particle size distributions by field-flow fractionation - Outlet and apparent poly-dispersity at constant field. **SCHURE M R.** JOURNAL OF CHROMATOGRAPHY. ELSEVIER SCIENCE PUBLISHERS, 22 Janvier 1999, vol. 831, 89-104
- Using Taylor dispersion profiles to characterize polymer molecular weight distributions. **KELLY B et al.** PHYSICAL CHEMISTRY CHEMICAL PHYSICS. ROYAL SOCIETY OF CHEMISTRY, 21 Décembre 2004, vol. 6, 5523-5530

- Taylor dispersion analysis of mixtures. **COTTET H et al.** ANALYTICAL CHEMISTRY. AMERICAN CHEMICAL SOCIETY, 01 Décembre 2007, vol. 79, 9066-9073
- Détermination of dendrigraft poly-L-lysine diffusion coefficients by Taylor dispersion analysis. **COTTET H et al.** BIOMACROMOLECULES. AMERICAN CHEMICAL SOCIETY, 01 Octobre 2007, vol. 8, 3235-3243